# EUROPEAN PATENT APPLICATION

(11) **EP 4 749 730 A1**
(43) Date of publication of application: **27.05.2026**
(21) Application number: 25218178.9
(22) Date of filing: 25.11.2025
(51) Int. Cl.: H01M 8/248, H01M 8/2475

(54) **ELECTROCHEMICAL CELL COLUMN INCLUDING COMPRESSION ASSEMBLY**

(30) Priority: 26.11.2024 US 202463725233 P; 15.04.2025 IN 202541036523
(71) Applicant: Bloom Energy Corporation, San Jose, CA 95134 (US)
(72) Inventor: PATEL, Siddharth, San Jose, CA 95134 (US); PETRUCHA, Michael, San Jose, CA 95134 (US); SOMASUNDARAM, Prabu, San Jose, CA 95134 (US); ASHARY, Adil A., San Jose, CA 95134 (US); ORTA-GUERRA, Rodrigo, San Jose, CA 95134 (US); GASDA, Michael, San Jose, CA 95134 (US); SINGH, Vivek, San Jose, CA 95134 (US); KHEDKAR, Ranjit B., San Jose, CA 95134 (US)
(74) Representative: Wichmann, Hendrik

(57) **Abstract**

A column includes a stack assembly including stacked electrochemical cells and interconnects, a ceramic frame surrounding the stack assembly, a first spring assembly located inside of the ceramic frame over the stack assembly and configured to apply a load to the stack assembly, and including a first rod plate and a first ceramic spring, a second spring assembly located inside of the ceramic frame between first spring assembly and the stack assembly and configured to apply a load to the stack assembly, and including a second rod plate and a second ceramic spring, and a first dome plate located between the first ceramic spring and the second ceramic spring.

## Description

### FIELD

Aspects of the present disclosure relate generally to electrochemical cell columns including electrochemical cell stacks, such as fuel cell or electrolyzer cell stacks, and in particular, to electrochemical cell columns including compression assemblies.

### BACKGROUND

A solid oxide fuel cell stack may include multiple fuel cells separated by metallic interconnects (ICs) which provide both electrical connection between adjacent cells in the stack and channels for delivery and removal of fuel and oxidant. For solid oxide fuel cells (SOFC), the metallic interconnects are commonly composed of Cr-based alloys, such as CrFe alloys, which have a composition of 95wt% Cr - 5wt% Fe or Cr-Fe-Y having a 94wt% Cr - 5wt% Fe - 1wt%Y composition. The CrFe and CrFeY alloys retain their strength and are dimensionally stable at typical solid oxide fuel cell operating conditions, e.g., 700-900 °C in both air and wet fuel atmospheres.

### SUMMARY

According to various embodiments, a column includes a stack assembly including vertically stacked electrochemical cells and interconnects, a ceramic frame surrounding the stack assembly, a first spring assembly located inside of the ceramic frame over the stack assembly and configured to apply a load to the stack assembly, and including a first rod plate and a first ceramic spring, a second spring assembly located inside of the ceramic frame between first spring assembly and the stack assembly and configured to apply a load to the stack assembly, and including a second rod plate and a second ceramic spring, and a first dome plate located between the first ceramic spring and the second ceramic spring.

According to various embodiments, a column includes a stack assembly comprising vertically stacked electrochemical cells and interconnects; a ceramic frame surrounding the stack assembly; a spring assembly located inside of the ceramic frame and comprising a ceramic spring configured to apply a load to the stack assembly; a dome plate contacting a top of the ceramic spring; and compression shims located between the ceramic frame and the dome plate, wherein at least one of the dome plate or the compression shims comprise a metal alloy material.

According to various embodiments, a pre-compressed compression assembly comprises a first rod plate; a first ceramic spring disposed on the first rod plate; a dome plate disposed on the first ceramic spring; a second ceramic spring disposed on the dome plate; a second rod plate disposed on the second ceramic spring; and at least one compression device forcing the first rod plate toward the second rod plate, such that the first and second ceramic springs are pressed against the dome plate.

According to various embodiments, a method of assembling an electrochemical cell column comprises providing a pre-compressed compression assembly comprising a first rod plate, a first ceramic spring disposed on the first rod plate, a dome plate disposed on the first ceramic spring, a second ceramic spring disposed on the dome plate, a second rod plate disposed on the second ceramic spring, and at least one compression device forcing the first rod plate toward the second rod plate, such that the first and second ceramic springs are pressed against the dome plate; placing the pre-compressed compression assembly into contact with an electrochemical cell column; and removing the at least one compression device, whereby the compression assembly applies pressure to electrochemical cells of the electrochemical cell column.

According to various embodiments, a method of assembling a compression assembly comprises stacking a first rod plate on a stage of a jig, the jig comprising corner locators located at corners of the stage and a side locator located between two of the corner locators at a side of the stage; inserting a setting plate between one of the corner locators and the first rod plate; stacking a first ceramic spring, a dome plate, a second ceramic spring, and a second rod plate on the first rod plate to form a compression assembly; using a compression tool to apply a first load to compress the compression assembly; placing air baffles on opposing first and second sides of the compression assembly; using the compression tool to apply a second load to further compress the compression assembly; placing clamps on the first and second sides of the compression assembly; and releasing the second load, such that the first and second rod plates are biased against the clamps by the first and second ceramic springs.

### BRIEF DESCRIPTION OF THE DRAWINGS

The accompanying drawings, which are included to provide a further understanding of the invention and are incorporated in and constitute a part of this specification, illustrate exemplary embodiments of the invention, and, together with the description, serve to explain the principles of the invention.
FIG. 1A is a perspective view of an electrochemical cell stack, according to various embodiments of the present disclosure.
FIG. 1B is a side cross-sectional view of a portion of the stack of FIG. 1A.
FIG. 2A is a top view of an air side of an interconnect, according to various embodiments of the present disclosure.
FIG. 2B is a top view of a fuel side of the interconnect of FIG. 2A.
FIG. 3 is a perspective view of an electrochemical cell column, according to various embodiments of the present disclosure.
FIG. 4A is a side cross-sectional view of a compression assembly, according to various embodiments of the present disclosure.
FIG. 4B is a perspective view of shims included in the compression assembly 460.
FIG. 5 is a side cross-sectional view of an alternative compression assembly (shown in an uncompressed state), according to various embodiments of the present disclosure.
FIG. 6 is a side cross-sectional view of an alternative compression assembly (shown in an uncompressed state), according to various embodiments of the present disclosure.
FIG. 7 is a side cross-sectional view of an alternative compression assembly, according to various embodiments of the present disclosure.
FIG. 8A is a side cross-sectional view of a portion of an electrochemical cell column including an alternative compression assembly, according to various embodiments of the present disclosure.
FIG. 8B is a side cross-sectional view showing a locking spring assembly of FIG. 8A in a contracted state.
FIG. 8C is a side cross-sectional view showing the locking spring assembly of FIG. 8A in an extended state.
FIG. 9A is a side cross-sectional view of a portion of an electrochemical cell column including an alternative compression assembly, according to various embodiments of the present disclosure.
FIG. 9B is a side cross-sectional view showing the electrochemical cell column of FIG. 9A after aging at operating temperature.
FIG. 10A is a perspective view showing a spring assembly located in a modified compression clamp, according to various embodiments of the present disclosure.
FIG 10B is a side cross sectional view showing a spring assembly located in a modified compression clamp, according to various embodiments of the present disclosure.
FIG. 11 is a side cross-sectional view of an alternative compression assembly, according to various embodiments of the present disclosure.
FIG. 12 is a side cross-sectional view of an upper portion of a cell column including an uncompressed dual spring compression assembly, according to various embodiments of the present disclosure.
FIG. 13A is a perspective view of an uncompressed compression assembly, according to various embodiments of the present disclosure, FIG. 13B is a side view of the compression assembly of FIG. 13A after pre-compression, and FIG. 13C is a top view of the compression assembly of FIGS. 13A and 13B.
FIGS. 14A-14F are perspective views illustrating steps in a method of assembling a pre-compressed compression assembly of FIG. 13B and a cell column including the same, according to various embodiments of the present disclosure.
FIG. 15 is a perspective view of another alternative rod plate according to another alternative embodiment.
FIG. 16A is a perspective view of a compression assembly in a compressed state according to various embodiments of the present disclosure, FIG. 16B is an exploded view of the compression assembly of FIG. 16A, and FIG. 16C is an exploded perspective view of plate shims, a ceramic spring, and spring shims the compression assembly of FIGS. 16A and FIGS 16B, according to various embodiments of the present disclosure.
FIGS. 17A-17I are perspective views of steps of assembling the compression assembly of FIG. 16A.

### DETAILED DESCRIPTION

The present disclosure is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present. It will be understood that for the purposes of this disclosure, "at least one of X, Y, and Z" can be construed as X only, Y only, Z only, or any combination of two or more items X, Y, and Z (e.g., XYZ, XYY, YZ, ZZ).

Electrochemical cell systems include fuel cell and electrolyzer cell systems. In a high temperature fuel cell system, such as a solid oxide fuel cell (SOFC) system, an oxidizing flow is directed to the air (i.e., cathode) side of the fuel cell while a fuel flow is directed to the fuel (e.g., anode) side of the fuel cell. The oxidizing flow is typically air, while the fuel flow can be a hydrogen (H₂), ammonia or a hydrocarbon fuel, such as methane, natural gas, ethanol, or methanol. The fuel cell, operating at a temperature between 750°C and 950°C, enables the transport of negatively charged oxygen ions from the air flow stream to the fuel flow stream, where the ions combine with either free hydrogen or hydrogen in a hydrocarbon molecule to form water vapor and/or with carbon monoxide to form carbon dioxide. The excess electrons from the negatively charged ions are routed back to the air side of the fuel cell through an electrical circuit completed between fuel electrode and the air electrode, resulting in an electrical current flow through the circuit.

In an electrolyzer system, such as a solid oxide electrolyzer system (SOEC), water (e.g., steam) is separated into hydrogen and oxygen by applying a voltage across the electrolyzer cells. In a SOEC stack, the anode is the air electrode and the cathode is the fuel electrode. Thus, the electrode to which the fuel (e.g., hydrogen or hydrocarbon fuel in a SOFC, and water in a SOEC) is supplied may be referred to as the fuel electrode and the opposing electrode may be referred to as the air electrode in both SOFC and SOEC cells.

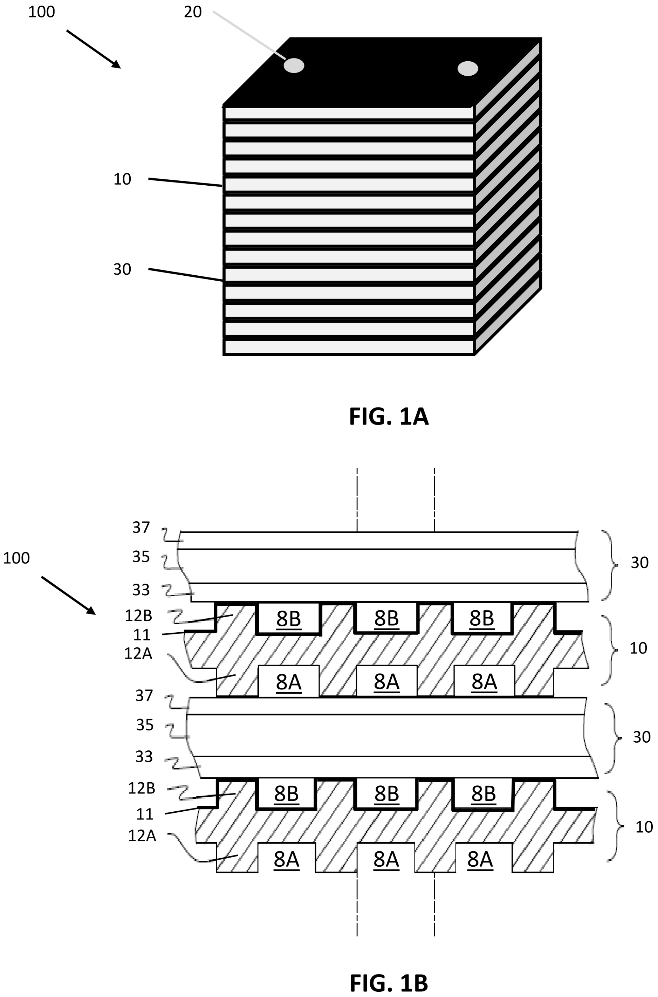

FIG. 1A is a perspective view of an electrochemical cell stack 100 and FIG. 1B is a sectional view of a portion of the stack 100, according to various embodiments of the present disclosure. In the embodiments below, the stack 100 is described as being operated as a solid oxide fuel cell (SOFC) stack 100. However, it should be noted that the stack 100 may also be operated as an electrolyzer (e.g., a solid oxide electrolyzer cell (SOEC) stack). Referring to FIGS. 1A and 1B, the stack 100 includes electrochemical cells 30 separated by interconnects 10. Referring to FIG. 1B, each electrochemical cell 30 comprises an air electrode 33, a solid oxide electrolyte 35, and a fuel electrode 37.

Various materials may be used for the air electrode 33, electrolyte 35, and fuel electrode 37. For example, the fuel electrode 37 may comprise a cermet comprising a nickel containing phase and a ceramic phase. The nickel containing phase may consist entirely of nickel in a reduced state. This phase may form nickel oxide when it is in an oxidized state. Thus, the fuel electrode 37 is preferably annealed in a reducing atmosphere prior to operation to reduce the nickel oxide to nickel. The nickel containing phase may include other metals in addition to nickel and/or nickel alloys. The ceramic phase may comprise a stabilized zirconia, such as yttria and/or scandia stabilized zirconia and/or a doped ceria, such as gadolinia, yttria and/or samaria doped ceria.

The electrolyte 35 may comprise a stabilized zirconia, such as scandia stabilized zirconia (SSZ) or yttria stabilized zirconia (YSZ). Alternatively, the electrolyte 35 may comprise another ionically conductive material, such as a doped ceria.

The air electrode 33 may comprise an electrically conductive material, such as an electrically conductive perovskite material, such as lanthanum strontium manganite (LSM). Other conductive perovskites, such as LSCo, etc., or metals, such as Pt, may also be used. The air electrode 33 may also contain a ceramic phase similar to the fuel electrode 37. The electrodes and the electrolyte may each comprise one or more sublayers of one or more of the above described materials.

Electrochemical cell stacks 100 are frequently built from a multiplicity of SOFCs 30 in the form of planar elements, tubes, or other geometries. Although the electrochemical cell stack 100 in FIG. 1A is vertically oriented, electrochemical cell stacks may be oriented horizontally or in any other direction. Fuel and air may be provided to the electrochemically active surface, which can be large. For example, fuel may be provided through fuel holes 20 formed in each interconnect 10. The fuel holes 20 may be aligned to form fuel conduits (i.e., fuel riser openings) that extend through the stack 100.

Each interconnect 10 electrically connects adjacent electrochemical cells 30 in the stack 100. In particular, an interconnect 10 may electrically connect the fuel electrode 37 of one electrochemical cell 30 to the air electrode 33 of an adjacent electrochemical cell 30. FIG. 1B shows that the lower electrochemical cell 30 is located between two interconnects 10. An optional Ni mesh may be used to electrically connect the interconnect 10 to the fuel electrode 37 of an adjacent electrochemical cell 30.

Each interconnect 10 includes fuel ribs 12A that at least partially define fuel channels 8A and air ribs 12B that at least partially define oxidant (e.g., air) channels 8B. The interconnect 10 may operate as a gas-fuel separator that separates a fuel, such as a hydrocarbon fuel, flowing to the fuel electrode 37 of one cell in the stack from oxidant, such as air, flowing to the air electrode 33 of an adjacent cell in the stack.

Each interconnect 10 may be made of or may contain electrically conductive material, such as a metal alloy (e.g., chromium-iron alloy) which has a similar coefficient of thermal expansion to that of the solid oxide electrolyte in the cells (e.g., a difference of 0-10%). For example, the interconnects 10 may comprise a metal (e.g., a chromium-iron alloy, such as 4-6 weight percent iron, optionally 1 or less weight percent yttrium and balance chromium alloy). Alternatively, any other suitable conductive interconnect material, such as stainless steel (e.g., ferritic stainless steel, SS446, SS430, etc.) or iron-chromium alloy (e.g., Crofer^{tm} 22 APU alloy which contains 20 to 24 wt.% Cr, less than 1 wt.% Mn, Ti and La, and balance Fe, or ZMG^{tm} 232L alloy which contains 21 to 23 wt.% Cr, 1 wt.% Mn and less than 1 wt.% Si, C, Ni, Al, Zr and La, and balance Fe) may be used. A protective layer 11, which may be formed of an electrically conductive material, such as lanthanum strontium manganite (LSM) and/or a spinel manganese cobalt oxide (MCO), may be provided on an air side of each interconnect 10.

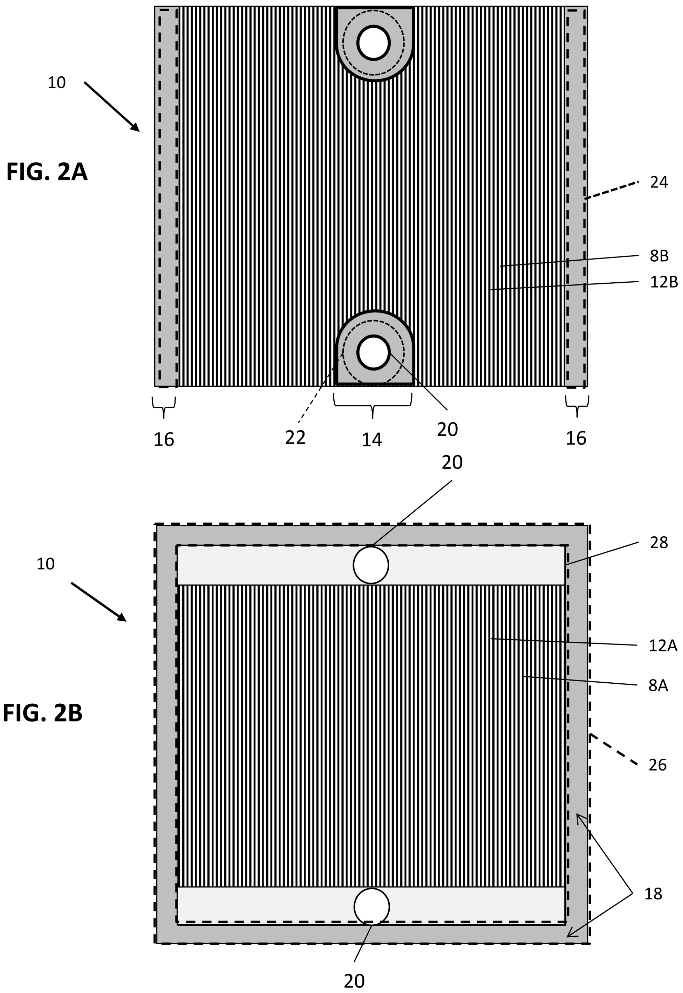

FIG. 2A is a top view of the air side of an exemplary interconnect 10, and FIG. 2B is a top view of a fuel side of the interconnect 10, according to various embodiments of the present disclosure. Referring to FIGS. 1B and 2A, the air side includes the air channels 8B. Air flows through the air channels 8B to an air electrode 33 of an adjacent electrochemical cell 30. The interconnect 10 may include ring seal regions 14 and strip seal regions 16. The seal regions 14, 16 may be flat surfaces that are coplanar with the tops of the air ribs 12B. Fuel holes 20 may be formed in the ring seal regions 14 and may extend through the interconnect 10. Ring seals 22 may be located on the ring seal regions 14 surrounding the fuel holes 20, to prevent fuel from contacting an adjacent air electrode 33. Strip seals 24 may be located on the strip seal regions 16. The seals 22, 24 may be formed of a glass or glass-ceramic material. The strip seal regions 16 may be elevated plateaus which do not include ribs or channels.

Referring to FIGS. 1B and 2B, the fuel side of the interconnect 10 may include the fuel channels 8A and fuel manifolds 28, which are surrounded by a frame seal region 18. The frame seal region 18 may be a flat region that is coplanar with the tops of the fuel ribs 12A. Fuel flows from one of the fuel holes 20 (e.g., inlet hole that forms part of the fuel inlet riser), into the adjacent manifold 28, through the fuel channels 8A, and to a fuel electrode 37 of an adjacent electrochemical cell 30. Excess fuel may flow into the other fuel manifold 28 and then into the other (e.g., outlet) fuel hole 20. A frame seal 26 may be located on the frame seal region 18. The frame seal 26 may be formed of a glass or glass-ceramic material.

The interconnect 10 illustrated in FIGS. 2A and 2B can be configured for co-flow operation (air and fuel flow in the same direction on opposite sides of the interconnect 10), or they can be configured for counter flow operation (air and fuel flow in opposite directions on opposite sides of the interconnect 10). However, other interconnect and stack configurations are possible in addition to stack 100 and interconnect 10. For example, the stacks may be internally manifolded for both fuel and air with fuel and air risers extending through openings in the fuel cell layers and/or in the interconnect plates. Such fuel cell stacks and interconnects are disclosed in U.S. Patent Application Serial No. 63/598,678, filed on November 14, 2023, entitled "Internally Manifolded Interconnects with Plural Flow Directions and Electrochemical Cell Column Including Same," the contents of which are incorporated herein by reference in their entirety. Similarly, the stacks may be internally manifolded for fuel and externally manifolded for air, with interconnects that are configured for cross-flow configuration (air and fuel flow in substantially perpendicular directions to each other on opposite sides of the interconnect), such as those disclosed in U.S. Patent No. 11,916,263, the contents of which are incorporated herein by reference in their entirety.

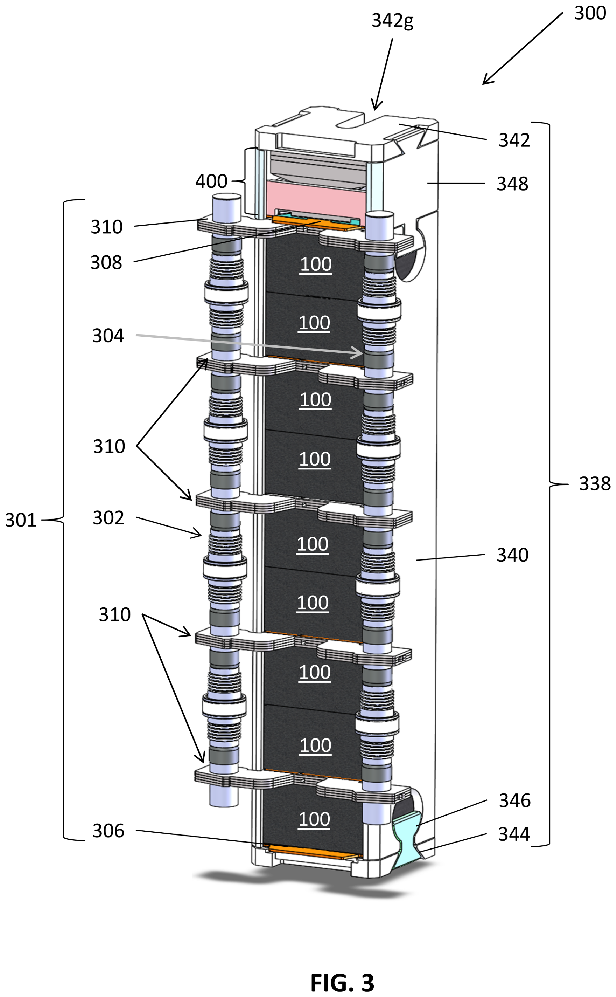

FIG. 3 is a perspective view of an electrochemical cell column 300, according to various embodiments of the present disclosure. Referring to FIGS. 1A, 1B, and 3, the column 300 may include a stack assembly 301 comprising multiple electrochemical cell stacks 100, an inlet conduit 302, an outlet conduit 304, a bottom termination plate 306, a top termination plate 308, and fuel manifolds 310 (e.g., anode splitter plates). The column 300 may also include a compression assembly 400, and a ceramic frame 338 surrounding the compression assembly 400 and the stack assembly 301. The ceramic frame 338 may comprise side baffles 340, a top plate 342, a bottom plate 344, bottom connectors 346, and top connectors 348. The bottom connectors 346 and the top connectors 348 connect the side baffles 340 to the bottom plate 344 and the top plate 342, respectively. In alternative embodiments, the stack assembly 301 includes only one stack of electrochemical cells and interconnects, and no fuel manifolds 310.

Each stack 100 may include any suitable number of electrochemical cells 30, such as from 10 to 40 cells 30, such as from 20 to 35 cells 30, or about 30 cells, and a corresponding number of interconnects 10 located therebetween. The stacks 100 may also include conductive layers (not shown), such as a nickel mesh, located between the fuel side of each interconnect 10 and the fuel electrode 37 of an adjacent electrochemical cell 30, to electrically connect the electrochemical cells 30 and interconnects 10 of the stack 100.

The inlet conduit 302 is fluidly connected to fuel manifolds 310 and is configured to provide a fuel stream (i.e., fuel inlet stream) to each fuel manifold 310. The outlet conduit 304 is fluidly connected to the fuel manifolds 310 and is configured to collect fuel exhaust (i.e., the fuel outlet stream) received from the fuel manifolds 310. The fuel manifolds 310 may be configured to provide a fuel to the stacks 100 and to receive the fuel exhaust from the stacks 100. For example, the fuel manifolds 310 may be fluidly connected to internal fuel riser channels formed by aligning the fuel holes 20 of the interconnects 10, as discussed above. To the extent that cross-flow interconnect structures disclosed in U.S. Patent No. 11,916,263 referenced above are utilized to manufacture column 300, inlet conduit 302, outlet conduit 304, and fuel manifolds 310 would not be necessary. In that cross-flow interconnect embodiment, fuel and exhaust flows are internally manifolded through fuel and exhaust risers within the column, wherein fuel and exhaust flows into and out of the column could be accomplished with fuel flow structures disclosed in U.S. Patent No. 11,764,389, the contents of which are incorporated herein in their entirety.

With regard to the ceramic frame 338, the bottom connectors 346 may be configured to connect the bottom plate 344 to the side baffles 340, such that portions of the side baffles 340 directly contact the bottom plate 344. The top connectors 348 may be configured to connect the top plate 342 to the side baffles 340. In various embodiments, the top connectors 348 may be longer and/or wider than the bottom connectors 346. In particular, the top connectors 348 may separate the top plate 342 and the side baffles 340, such that top plate 342 does not directly contact the side baffles 340. As such, the top connectors 348 may be configured to increase the height (e.g., length) of the column 300. Therefore, the top connectors 348 may provide additional space inside of the ceramic frame, such that the uppermost stack 100 may be added to the stack assembly 301, without increasing the length of the side baffles 340. All components of the ceramic frame 338 comprise a ceramic or a ceramic matrix composite material.

### Column Compression

The compression assembly 400 may be located between the top plate 342 and the top termination plate 308 and may be configured to apply pressure and compress the stack assembly 301, so as to seal the stacks 100 to adjacent components (e.g., other stacks 100, the fuel manifolds 310 and/or the termination plates 306, 308).

In various embodiments, interface seals between adjacent stacks 100 or between a stack 100 and an adjacent fuel manifold 310 may be compressed and the height of the stack assembly 301 may be reduced over time at the high column 300 operating temperatures. For example, compression of glass and/or glass ceramic seals may reduce a distance between internal elements of the stack assembly 301 (e.g., between adjacent stacks 100 or between a stack 100 and adjacent fuel manifold 310), thereby reducing the height of the stack assembly 301. This height reduction may reduce the amount of pressure applied to the stacks 100 in the stack assembly 301 by the compression assembly 400. This problem may be exacerbated when the stack assembly 301 includes higher numbers of stacks 100 and/or cells 30. Accordingly, various embodiment compression assemblies 400 are configured to maintain and/or increase stack 100 and stack assembly 301 compression. Improved stack 100 compression may improve electrical load following of the column 300.

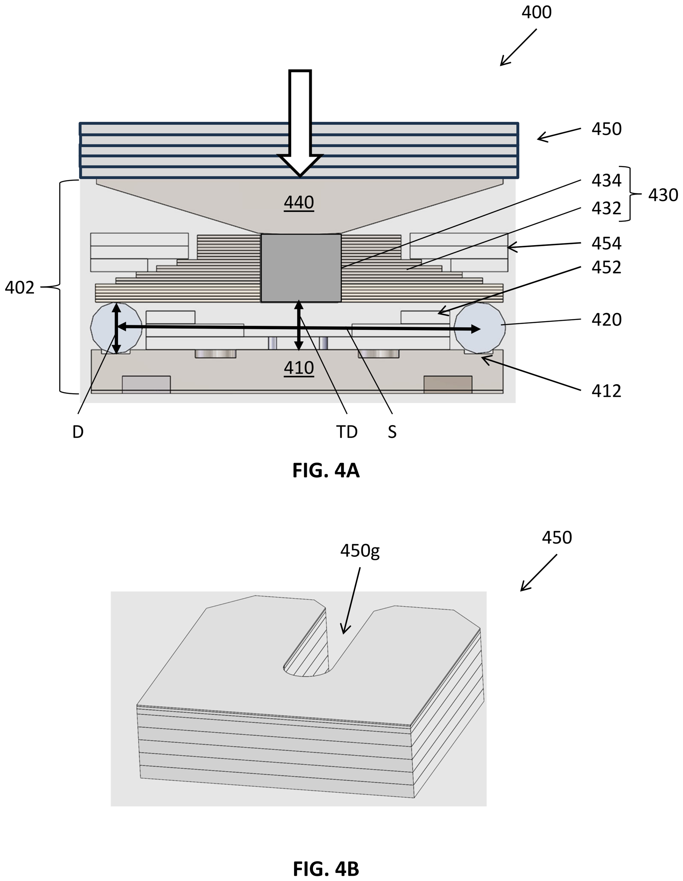

FIG. 4A is a side cross-sectional view of a compression assembly 400, according to various embodiments of the present disclosure, and FIG. 4B is a perspective view of compression shims 450 that may be included in the compression assembly 400.

Referring to FIGS. 3, 4A, and 4B, the compression assembly 400, which is shown in an uncompressed state, may include a spring assembly 402 and compression shims 450 located over (e.g., directly on) the spring assembly 402. The spring assembly 402 may include a rod plate 410, support rods 420, a ceramic spring 430, a dome plate 440, optional plate shims 452, and optional spring shims 454. The rod plate 410 may comprise a ceramic plate, such as an alumina plate, and may include recesses 412 formed on opposing sides of the top surface thereof. The support rods 420 may be located in the recesses 412, such that the support rods 420 extend along the opposing sides of the rod plate 410 adjacent to the perimeter of the rod plate 410. The support rods 420 may be formed of a ceramic material, such as alumina, or a high temperature resistant metal or metal alloy, such as stainless steel, a nickel-chromium alloy (e.g., Inconel), or the like.

The ceramic spring 430 may be located on the support rods 420, such that the support rods 420 support opposing peripheral edges of the ceramic spring 430. The dome plate 440 may be located above the ceramic spring 430. The compression shims 450 may be located between the top plate 342 and the dome plate 440. The dome plate 440 comprises a plate which includes a dome on at least one side thereof, and may have a relatively small bottom surface that contacts the center of the ceramic spring 430, a relatively large top surface that contacts the compression shims 450, and tapered sidewalls connecting the top and bottom surfaces of the ceramic spring 430. The dome plate 440 presses on the top surface at the center of the ceramic spring 430 to bend (i.e., deflect) the center of the ceramic spring 430 downward toward the rod plate 410. The support rods 420 prevent the peripheral portions of the ceramic spring 430 from bending downward toward the rod plate 410. The plate shims 452 may be located on the top surface of the rod plate 410, inside of the support rods 420, and the spring shims 454 may be located on top of the peripheral portions of the ceramic spring 430.

In some embodiments, the ceramic spring 430 may be configured as a leaf spring. For example, the ceramic spring 430 may include multiple layers 432 of a composite ceramic matrix (CMC) material, which may optionally be connected by a layer fastener 434. The CMC material is an oxide material and may be immune to oxidation at high operating temperatures and may also retain its shear modulus at operating temperatures without suffering from high temperature creep.

During fabrication of the column 300, the stacks 100 and fuel manifolds 310 may be stacked on the bottom terminal plate 306 and the bottom plate 344, and the side baffles 340 may be connected to the bottom plate 344 by the bottom connectors 346. The top terminal plate 308 may be placed over the stack assembly 301, and the compression assembly 400 may be placed on top of top terminal plate 308. The top plate 342 may be located on the compression assembly 400, and an external load may be applied to the dome plate 440. In particular, the load may be applied directly to the dome plate 440 via a groove 342g formed in the top plate 342 and a groove 450g formed in the compression shims 450. The external load forces the dome plate 440 towards the rod plate 410, which compresses the ceramic spring 430 by deflecting the middle of the ceramic spring 430 towards the rod plate 410. As a result, the compression shims 450 and the top plate 342 may also move closer to the rod plate 410.

The top plate 342 may be attached to the side baffles 340 using the top connectors 348, and the external load may be released after the fabrication of the column 300 is completed. However, the ceramic spring 430 remains in a compressed state, such that the ceramic spring 430 applies a load to the stack assembly 301 via the support rods 420 and the rod plate 410.

The location of the support rods 420 at opposing peripheral edges of the rod plate 410 increase the span S between the support rods 420, as compared to prior designs in which the support rods 420 are located closer to each other. Increasing the span S of the support rods 420 may increase the travel distance TD of the ceramic spring 430 under a given load, as compared to prior designs having a smaller span. As such, the ceramic spring 430 may apply pressure over a longer distance.

The present inventors determined that increasing the span S of the support rods 420 may reduce the load carrying capacity of the ceramic spring 430, at least over relatively short travel distances TD. To compensate the load carrying capacity reduction, the diameters D of the support rods 420 may be increased as compared to prior designs, in order to increase the maximum travel distance TD of the ceramic spring 430, for the ceramic spring 430 to apply a larger load on the stack assembly 301. In some embodiments, the diameter D and the span S of the support rods 420 may be controlled to balance the travel distance TD and the compressive force of the ceramic spring 430. A balance between support rod diameter D and span S increase can achieve higher travel distance TD and maintain higher overall compression by the ceramic spring 430. For example, the span S may be greater than 80 mm, such as 85 to 125 nm, and the support rod diameter D may be greater than 13 mm, such as 14 to 20 mm.

In some embodiments, the compression shims 450 may be formed of a ceramic material, such as alumina, in order to withstand stack operating temperatures without oxidation. However, in other embodiments, one or more of the compression shims 450 may be formed of a high temperature resistant metal or metal alloy having a higher coefficient of thermal expansion (CTE) than a ceramic material, such as alumina. For example, one or more of the compression shims 450 may be formed of stainless steel (e.g., SS 316), a nickel-chromium alloy (e.g., an Inconel alloy, such as Inconel 600, 625, 718 or X-750 containing at least 50 weight percent nickel (e.g., 50 to 75 wt% nickel) and at least 14 weight percent chromium (e.g., 14 to 23 wt% chromium), or the like. In such embodiments, the thermal expansion of the metal alloy compression shims 450 during column operation may increase the load applied to the stack assembly 301. For example, replacing about 40 mm worth of ceramic compression shims 450 with compression shims 450 formed of a metal such as stainless steel or an Inconel alloy may increase the load applied to the stack assembly 301 by about 20-25 lbf (e.g., about 0.01 metric tons).

In one embodiment, the dome plate 440 may be formed of a ceramic material, such as alumina, in order to withstand stack operating temperatures without oxidation. However, in other embodiments, the dome plate 440 may be formed of a high temperature resistant metal or metal alloy having a higher coefficient of thermal expansion (CTE) than a ceramic material, such as alumina. For example, the dome plate 440 may be formed of stainless steel (e.g., SS 316), a nickel-chromium alloy (e.g., an Inconel alloy, such as Inconel 600, 625, 718 or X-750 containing at least 50 weight percent nickel (e.g., 50 to 75 wt% nickel) and at least 14 weight percent chromium (e.g., 14 to 23 wt% chromium), or the like.

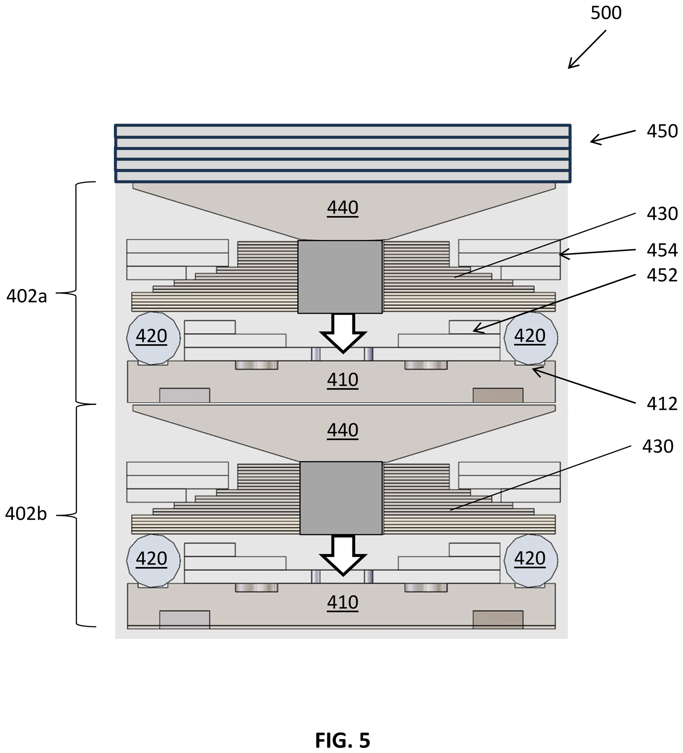

FIG. 5 is a side cross-sectional view of an alternative compression assembly 500 (shown in an uncompressed state), according to various embodiments of the present disclosure. The compression assembly 500 may be similar to the compression assembly 400. As such, only the differences therebetween will be discussed in detail.

Referring to FIG. 5, the compression assembly 500 may include a first (i.e., upper) spring assembly 402a and a second (i.e., lower) spring assembly 402b. Spring assembly 402a may be vertically stacked on spring assembly 402b. In some embodiments, the compression assembly 500 may optionally include compression shims 450 located on top of the first spring assembly 402a.

The dual spring assembly configuration of the compression assembly 500 provides a higher compressive force over a larger spring travel distance than single spring assembly configurations. Accordingly, utilizing two ceramic springs 430 in series compensates for the load reduction due to stack assembly 301 shrinkage. For example, when the height of a stack assembly is reduced by 7 mm due to seal compaction, the compression assembly 500 may apply a load that is from about 2 to about 4 times greater than a compression assembly including a single spring assembly.

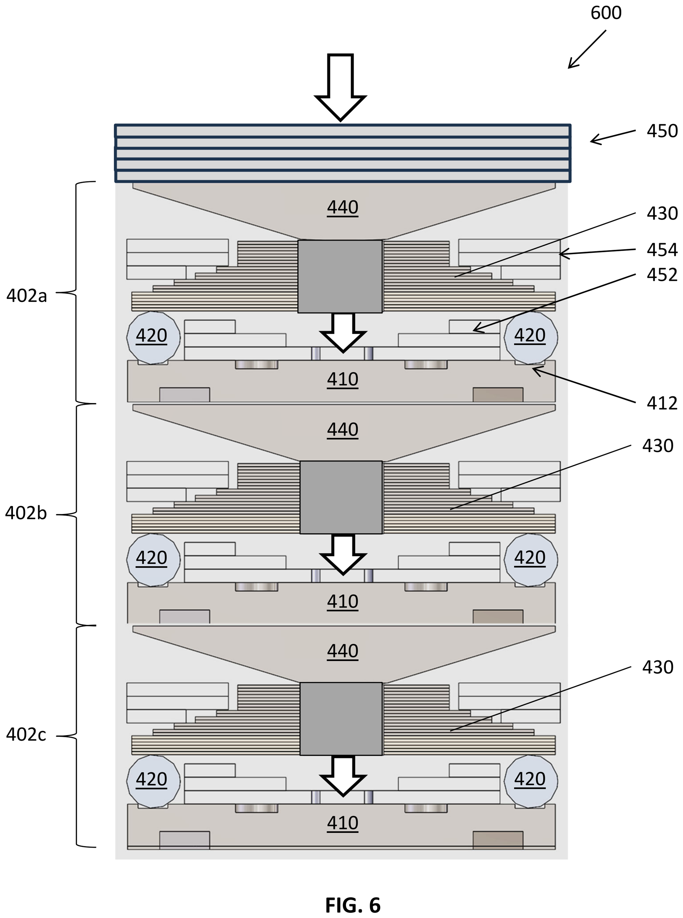

FIG. 6 is a side cross-sectional view of an alternative compression assembly 600 (shown in an uncompressed state), according to various embodiments of the present disclosure. The compression assembly 600 may be similar to the compression assembly 500. As such, only the differences therebetween will be discussed in detail.

Referring to FIG. 6, the compression assembly 600 may include a first spring assembly 402a, a second spring assembly 402b, and a third spring assembly 402c, which may be vertically stacked on one another. In some embodiments, the compression assembly 600 may optionally include compression shims 450 located on top of the first spring assembly 402a. The three spring assemblies 402a, 402b, 402c of the compression assembly 600 provide an even higher compressive force over a larger spring travel distance than single spring configurations.

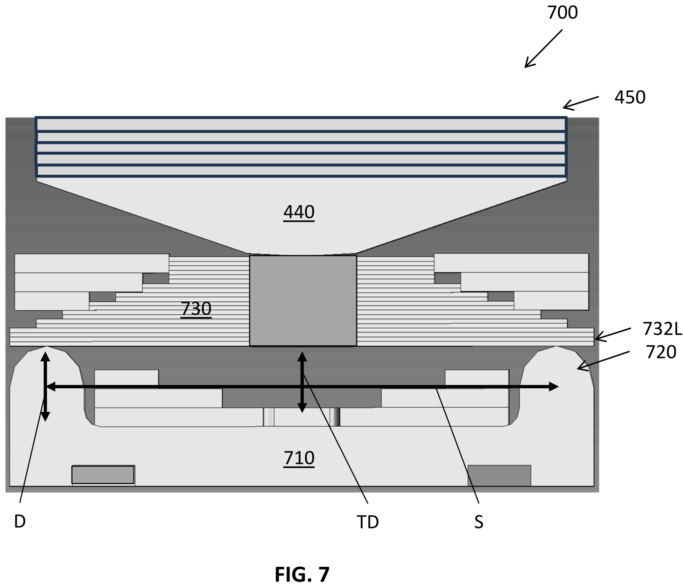

FIG. 7 is a side cross-sectional view of an alternative compression assembly 700, according to various embodiments of the present disclosure. The compression assembly 700 may be similar to the compression assembly 400. As such, only the differences therebetween will be discussed in detail.

Referring to FIGS. 4A and 7, the compression assembly 700 may include an alternative rod plate 710 including integrated support elements 720 (e.g., integrated support rods) and a ceramic spring 730 located on the support elements 720. The support elements 720 may be linear protrusions that extend from an upper surface of the rod plate 710. As such, the rod plate 710 and the support elements 720 may comprise a unitary component formed of a ceramic material. A span S of the support elements 720 may be greater than a span of the support rods 420 of the compression assembly 400. The ceramic spring 730 may be larger than the ceramic spring 430, in order to match the increased span S. For example, the ceramic spring 730 may include additional CMC layers 732L that extend outside of the perimeter of the dome plate 440 located thereon.

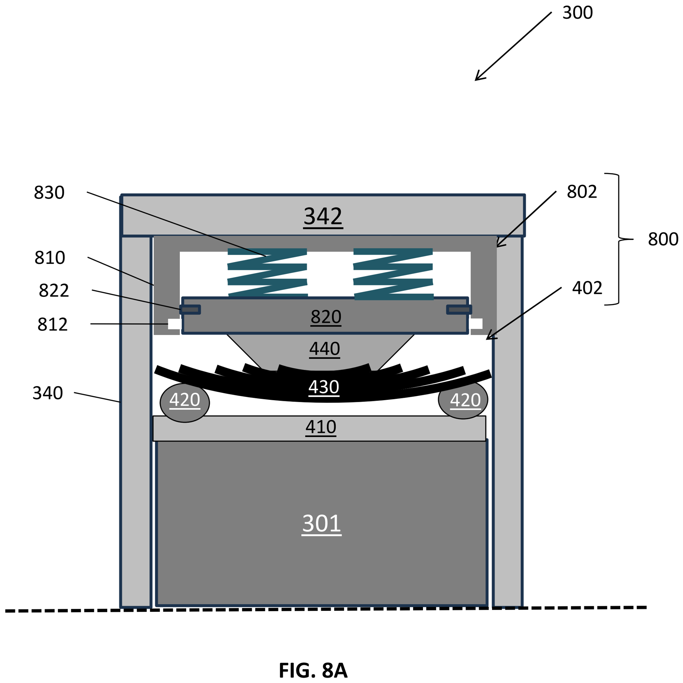

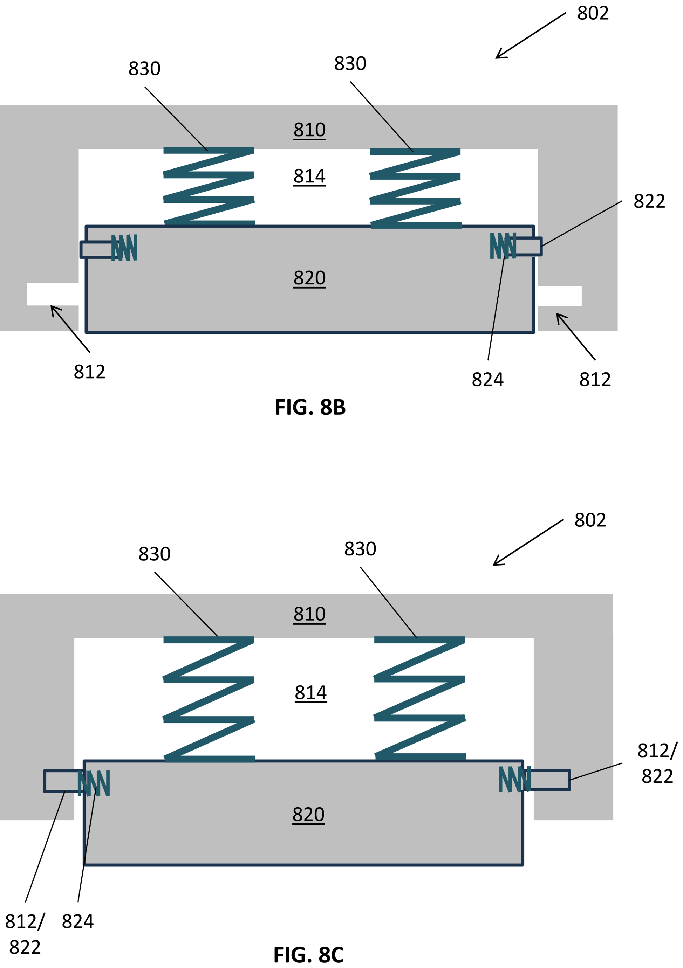

FIG. 8A is a side cross-sectional view of a portion of a column 300 including an alternative compression assembly 800, according to various embodiments of the present disclosure, FIG. 8B is a side cross-sectional view showing a locking spring assembly 802 of FIG. 8A in a contracted state, and FIG. 8C is a side cross-sectional view showing the locking spring assembly 802 in an extended state. The compression assembly 800 may be similar to the compression assembly 400. As such, only the differences therebetween will be discussed in detail.

Referring to FIGS. 8A, 8B, and 8C, the compression assembly 800 may include a spring assembly 402 and the locking spring assembly (LSA) 802, which may be located between the spring assembly 402 and the top plate 342 of the column 300. The LSA 802 may include a housing 810, a compression plate 820, and one or more metal springs 830. The housing 810 and the compression plate 820 may be formed of a high temperature resistant metal or metal alloy material, such as stainless steel or a nickel-chromium alloy, or may be formed of a ceramic material, such as alumina. For example, the housing 810 and/or the compression plate 820 may be formed of the same ceramic material as the side baffles 340 and the top plate 342, or they may be formed of a stainless steel material. The one or more metal springs 830 may be formed of a high temperature resistant metal or metal alloy material, such as tungsten, stainless steel (e.g., SS 316) or a nickel-chromium alloy (e.g., the above described Inconel alloys, such as Inconel 625). Preferably, the metal springs 830 may have a spring constant that is higher (e.g., at least 5% higher) than the spring constant of the ceramic spring 430.

The housing 810 may include pin recesses 812 in the inner sidewall of the housing 810, and an internal chamber 814. The compression plate 820 may include spring loaded locking pins 822 and pin springs 824 inserted in grooves in sidewalls of the compression plate 820. The compression plate 820 may be moveably located within the internal chamber 814 of the housing 810 below the top of the housing 810. The metal springs 830 may be compressed between the compression plate 820 and the top of the housing 810.

As shown in FIGS. 8A and 8B, when the column 300 is initially assembled, an initial load may be applied to the column 300 such that the compression assembly 800 is compressed against the stacks 100 of the stack assembly 301. In particular, the compression plate 820 may be fully inserted into the housing 810, the metal springs 830 may be fully compressed, and the locking pins 822 may be forced into the grooves in the sidewall of the compression plate 820. In addition, the ceramic spring 430 may be deflected downward toward the rod plate 410.

As the column 300 is operated to generate power or hydrogen, the compaction of the column seals may reduce the height of the stack assembly 301. As the stack assembly 301 is shortened, as shown in FIG. 8C, the metal springs 830 force the compression plate 820 downward in the internal chamber 814 of the housing 810 by a corresponding distance, thereby maintaining the relative locations of the spring assembly 402 and the stack assembly 301. In particular, the LSA 802 may force the spring assembly 402 away from the top plate 342, to maintain a constant distance between the spring assembly 402 and the stack assembly 301. When the compression plate 820 is fully extended downward in the internal chamber 814 of the housing 810, the locking pins 822 align with the pin recesses 812, and may be forced into the pin recesses 812 by the pin springs 824, thereby locking the compression plate 820 in the extended position.

In summary, the LSA 802 is configured to have the locking pins 822 lock inside the pin recesses 812, as height of the stack assembly 301 starts to shrink. Since the spring constant of the metal springs 830 is higher than that of the ceramic spring 430, when stack assembly 301 starts to shrink, the LSA 802 starts relaxing before the spring assembly 402. This relaxation permits the locking pins 822 to lock inside the pin recesses 812 while still keeping the ceramic spring 430 sufficiently compressed. At this point, all compression on the stack assembly is maintained by the spring assembly 402. Therefore, the initial part of the stack assembly 301 shrinkage is shared by the LSA 802. However, once the locking pins 822 are locked inside the pin recesses 812, the LSA 802 can no longer deform, and therefore does not negatively affect the pressure exerted on the stack assembly 301 due to creep during high temperature column 300 operation even through the LSA 802 is formed of a metal or metal alloy.

Accordingly, the LSA 802 may compensate for the contraction of the stack assembly 301 by moving the spring assembly 402 downward in the column 300. As a result, the amount of compression applied to stack assembly 301 by the ceramic spring 430 may remain substantially constant before and after contraction of the stack assembly 301.

In addition, the locking of the compression plate 820 into the extended position shown in FIG. 8C allows for the LSA 802 to include the metal springs 830 rather than the ceramic spring 430 of the spring assembly 402. In particular, locking the compression plate 820 into the housing 810 prevents a reduction in the spring coefficient of the metal springs 830 due to metal creep resulting from high temperature exposure. As such, the utilizing the relatively inexpensive LSA 802 and a single spring assembly 402 provides similar stack assembly 301 compression as a dual spring assembly configuration, at a reduced cost.

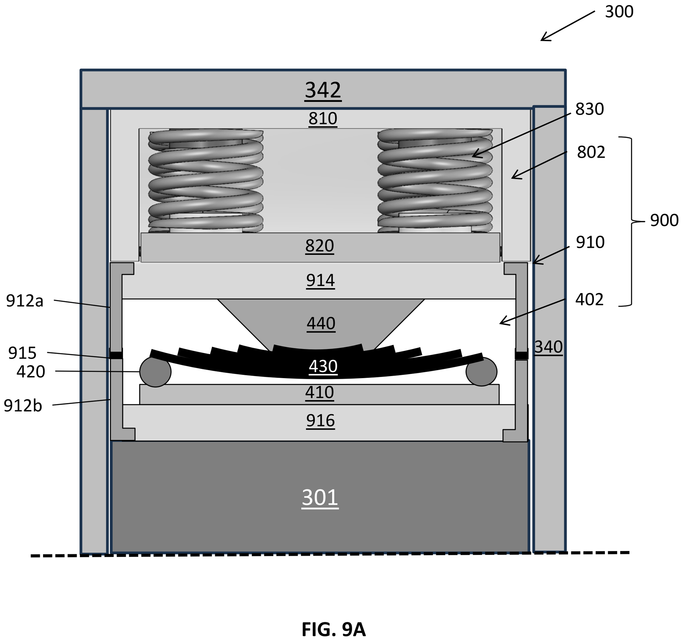

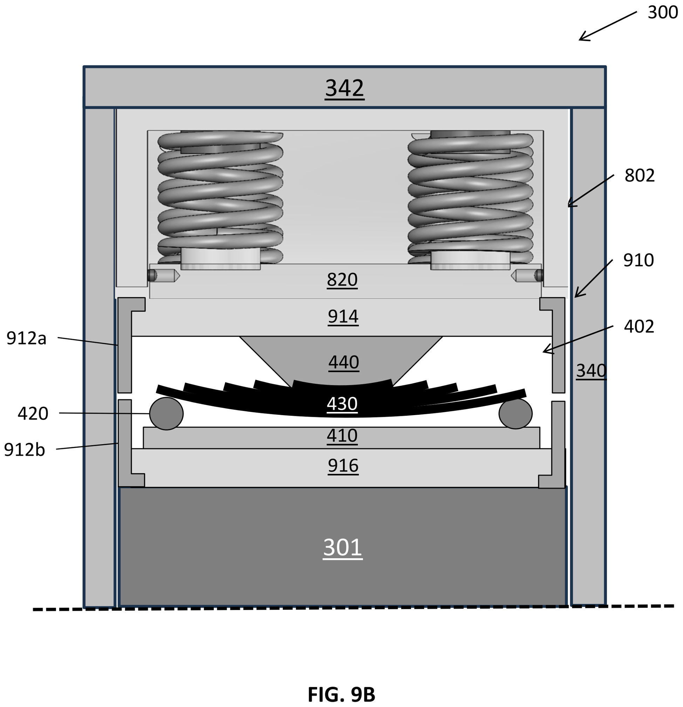

FIG. 9A is a side cross-sectional view of a portion of a column 300 including an alternative compression assembly 900 before column 300 has been placed into operation (e.g., prior to stack assembly shrinkage), according to various embodiments of the present disclosure, and FIG. 9B is a side cross-sectional view showing the column 300 of FIG. 9A after aging at column 300 operating temperature. The compression assembly 900 may be similar to the compression assembly 800. As such, only the differences therebetween will be discussed in detail.

Referring to FIGS. 9A and 9B, the compression assembly 900 may include the spring assembly 402, the LSA 802, and a compression clamp 910 that are located over the stack assembly 301. The spring assembly 402 may include the rod plate 410, support rods 420, the ceramic spring 430, and the dome plate 440, as described above. Although not shown, the spring assembly 402 may also optionally include plate shims and spring shims, as described above with respect to the spring assembly 402.

The compression clamp 910 may be configured to selectively apply pressure to opposing sides of the spring assembly 402, such that the ceramic spring 430 is held in a compressed state during column 300 assembly. As such, the compression clamp 910 may prevent a load stored in the ceramic spring 430 from being applied to the stack assembly 301. The compression clamp 910 may include sidewalls 912, an upper plate 914, and a lower plate 916. The lower plate 916 may be located under the rod plate 410, the upper plate 914 may be located on the dome plate 440, and the sidewalls 912 may connect the upper and lower plates 914, 916. While the column 300 is initially assembled, the sidewalls 912 may be configured hold to the upper and lower plates 914, 916 in a position that compresses the ceramic spring 430. Accordingly, the compression clamp 910 compresses the ceramic spring 430, such that the ceramic spring 430 is deflected downwards towards the rod plate 410.

In one embodiment, the sidewalls 912 may each include an upper portion 912a and a lower portion 912b that are bonded together by a bonding layer 915. The bonding layer 915 may be configured to release the upper and lower portions 912a, 912b when heated to an elevated temperature. For example, the bonding layer 915 may comprise braze material that is brazed to the upper and lower portions of the sidewalls 912. The bonding layer 915 is configured to delaminate as the column 300 approaches or reaches its operating temperature. For example, the bonding layer 915 may be configured to delaminate at a temperature ranging from about 700 °C to about 850 °C, such as a temperature ranging from about 720 °C to about 820 °C, or about 780 °C. The bonding layer 915 may be formed of a braze material such as an Ag/Cu/Ni alloy (e.g., Nicusil-3 which has a solidus temperature of 780 °C and comprises 71.15 wt% Ag, 28.1 wt% Cu and 0.75 wt% Ni), an Al/Sc alloy, an As/Cu alloy, a Pb/Ti alloy, an Fe/Sb alloy, or an Ag/Cu alloy. Specifically, the bonding layer 915 delaminates by entering a semi-solid phase above its solidus temperature which is not sufficient to keep the upper and lower portions 912a, 912b bonded (i.e., brazed) to each other.

As shown in FIG. 9A, prior to operating column 300, the LSA 802 and the spring assembly 402 may be completely compressed. For example, the compression plate 820 may be in a contracted position and located completely within the housing 810, and a maximum load may be stored in the ceramic spring 430. The external load holds the LSA 802 in the compressed position, while the compression clamp 910 holds the spring assembly 402 in the compressed position.

As shown in FIG. 9B, after the column has been brought to a high operating temperature, such as during column conditioning (e.g., annealing at a high temperature in a reducing ambient to convert nickel oxide in the cell fuel electrodes to nickel) and/or operation (e.g., to generate power or hydrogen), the stack assembly 301 may shrink and the compression plate 820 may extend from the LSA 802 by a corresponding distance. The bonding layer 915 is configured to delaminate from the upper and/or lower portions 912a, 912b of the sidewalls at a set release temperature to disconnect the upper and lower portions 912a, 912b. This releases the spring assembly 402 from the compressed state and allows the ceramic spring 430 to apply a load to the stack assembly 301. In some embodiments, the delamination temperature may be set such that the bonding layer 915 delaminates after the compression plate 820 is in the fully extended position, and/or the stack assembly 301 reaches a predicted amount of height reduction (e.g., after stack assembly seal compaction/thickness reduction is substantially complete). For example, the bonding layer 915 may be configured to delaminate (e.g., change from the solid state to a semi-solid "eutectic phase" state) at a temperature that is higher than a glass transition temperature of one or more glass or glass-ceramic seals of the stack assembly 301, such as manifold seals used to seal the stacks 100 to the manifolds 310 (see FIG. 3). As such, the bonding layer 915 may be configured to delaminate after all or a majority of the stack assembly 301 shrinkage has been compensated for by the LSA 802.

The separation of the upper and lower portions 912a, 912b of the sidewalls 912 allows the load stored in the ceramic spring 430 to be applied to the stack assembly 301. In addition, the extension of the LSA 802 prevents and/or minimizes a reduction in the load applied by the spring assembly 402 to the stack assembly 301, by reducing a travel distance of the ceramic spring 430 needed to apply a load to the stack assembly 301.

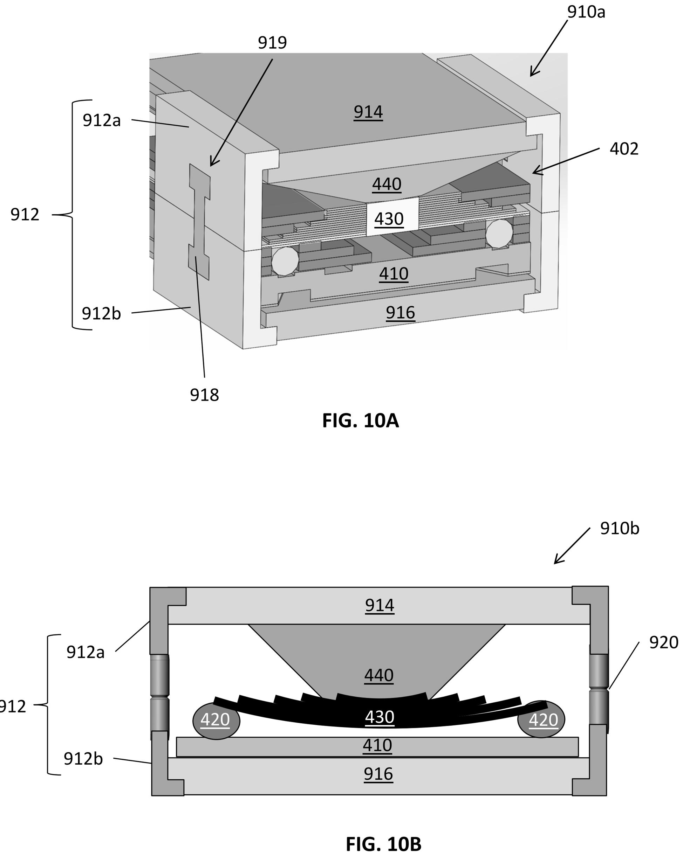

FIG. 10A is a perspective view showing a spring assembly 402 located in a modified compression clamp 910a, according to a first alternative embodiment of the present disclosure, and FIG 10B is a side cross sectional view showing a spring assembly 402 located in another modified compression clamp 910b, according to a second alternative embodiment of the present disclosure. The compression clamps 910a, 910b may be similar to the compression clamp 910. As such, only the differences therebetween will be discussed in detail.

Referring to FIG. 10A, the compression clamp 910a may include eutectic pins 918 configured to selectively connect the upper and lower portions 912a, 912b of the sidewalls 912. The eutectic pins 918 may have an I-beam shape having wider top and bottom portions than a middle portion. The eutectic pins 918 may be inserted into corresponding I-shaped openings 919 formed in the upper and lower portions 912a, 912b of the sidewalls 912. The eutectic pins 918 may be configured to at least partially melt (e.g., enter a semi-solid "eutectic phase" state) at an elevated temperature, in order to allow for separation of the upper and lower portions 912a, 912b. For example, the eutectic pins 918 may be configured to melt at a temperature ranging from about 700 °C to about 850 °C, such as a temperature ranging from about 720 °C to about 780 °C, or about 750 °C, thereby allowing the upper and lower portions 912a, 912b to be separated from each other due to the vertical load applied by ceramic spring 430.

Referring to FIG. 10B, the compression clamp 910b may include shear or clevis pins 920 configured to connect the upper and lower portions 912a, 912b of the sidewalls 912. The shear or clevis pins 920 may be configured to shear or break at an elevated temperature, in order to allow for separation of the upper and lower portions 912a, 912b. In particular, the shear or clevis pins 920 may be configured to shear or break at a temperature ranging from about 700 °C to about 850 °C, such as a temperature ranging from about 720 °C to about 780 °C, or about 750 °C, thereby allowing the upper and lower portions 912a, 912b to be separated from each other due to the vertical load applied by ceramic spring 430.

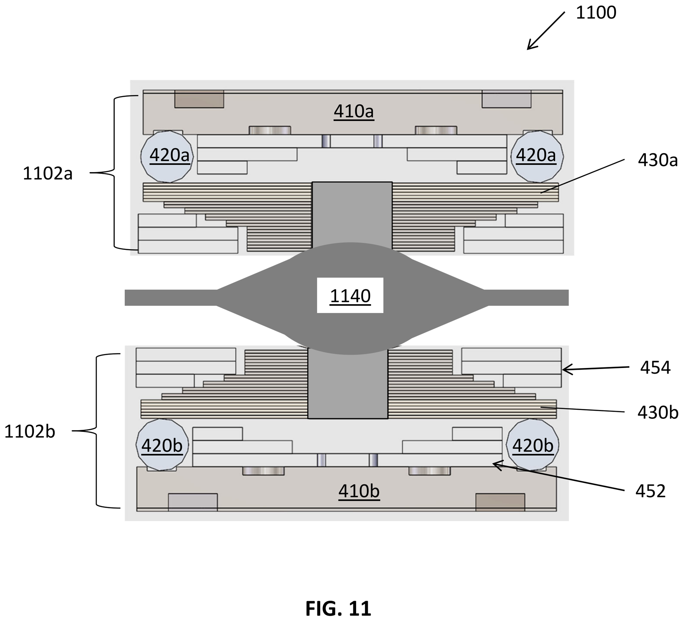

FIG. 11 is a side cross-sectional view of an alternative compression assembly 1100 (shown in an uncompressed state), according to various embodiments of the present disclosure. The compression assembly 1100 may be similar to the compression assembly 500. As such, only the differences therebetween will be discussed in detail.

Referring to FIG. 11, the compression assembly 1100 may include a first spring assembly 1102a, a second spring assembly 1102b, and a dome plate 1140 located therebetween. Each spring assembly 1102a, 1102b may include a rod plate 410, support rods 420, a ceramic spring 430, optional plate shims 452, and optional spring shims 454. The first spring assembly 1102a includes a first rod plate 410a, first support rods 420a, and a first ceramic spring 430a. The second spring assembly 1102b includes a second rod plate 410b, second support rods 420b, and a second ceramic spring 430b. The first support rods 420a contact a bottom surface of the first rod plate 410a and a top surface of the first ceramic spring 430a, while the second support rods 420b contact a top surface of the second rod plate 410b and a bottom surface of the second ceramic spring 430b.

In an alternative embodiment, at least one of the rod plates 410 and support rods 420 may comprise the rod plate 710 with integrated support rods 720, as shown in FIG. 7. For example, the first (i.e., upper) rod plate 410a may be integrated with the first support rods 420a, while the second (i.e., lower) rod plate 410b may be separate from the second support rods 420b which are located in recesses 412 in the second rod plate 410b. In this embodiment, the first rod plate 410a comprises integrated first support rods 420a extending downward from a bottom surface of the first rod plate 410a and contacting a top surface of the first ceramic spring 430a, while the second spring assembly 1102b comprises support rods 420b contacting a top surface of the separate second rod plate 410b and a bottom surface of the second ceramic spring 430b.

The dome plate 1140 may have opposing curved surfaces that respectively contact the first ceramic spring 430a and the second ceramic spring 430b of the first and second spring assemblies 1102a, 1102b, respectively. Thus, the dome plate 1140 is located between the first ceramic spring 430a and the second ceramic spring 430b. In some embodiments, the compression assembly 1100 may optionally include the compression shims (not shown) located on top of the first spring assembly 1102a.

Each ceramic spring 430a, 430b curves around a corresponding upper and lower surface of the common dome plate 1140 when the compression assembly 1100 is under compression, thereby reducing a spring gap for both of the ceramic springs 430. Accordingly, the compression assembly 1100 may provide higher overall load storage and increased spring travel for a given amount of load applied thereto, as compared to a spring assembly that includes only a single ceramic spring. For example, the compression assembly 1100 may apply a load to a stack assembly that is from about 250% to about 300%, such as about 275% greater than a single-spring compression assembly shown in FIG. 4 at a given amount of spring travel.

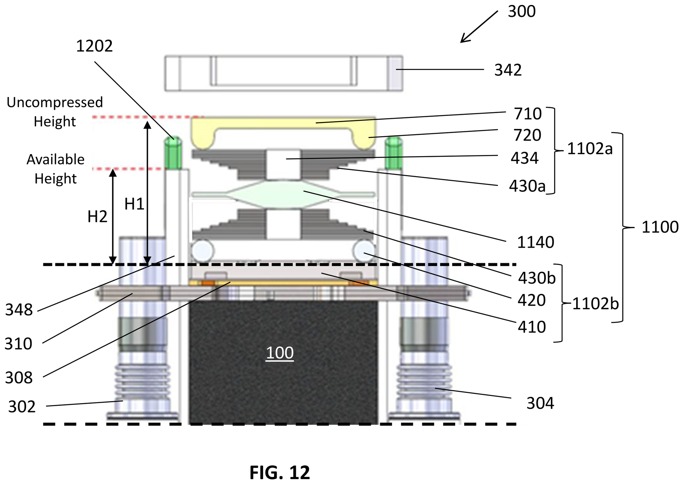

Another embodiment of a dual spring compression assembly 1100 is shown in FIG. 12. In this embodiment, the first (e.g., upper) compression spring assembly 1102a includes the rod plate 710 with integrated support elements 720, as described above with respect to FIG. 7, while the second (e.g., lower) compression spring assembly 1102b includes the rod plate 410 in contact with support rods 420. In other embodiments, both the first and the second compression assemblies 1102a and 1102b may have a similar structure in which both rod plates either have the integrated support elements 720 or both rod plates are in contact with the respective support rods 420.

The cell column 300 shown in FIG. 12 is undergoing assembly using assembly tools 1202. When the dual spring compression assembly 1100 shown in FIG. 12 is not under compression, the height H1 of the compression assembly 1100 may be greater than an available height H2 at the top of a cell column 300 (e.g., the height of the top connectors 348). As such, an uncompressed compression assembly 1100 may complicate column 300 assembly. To facilitate easier assembly, the following embodiments provide compression assemblies that are configured for pre-compression and methods of fabricating pre-compressed compression assemblies.

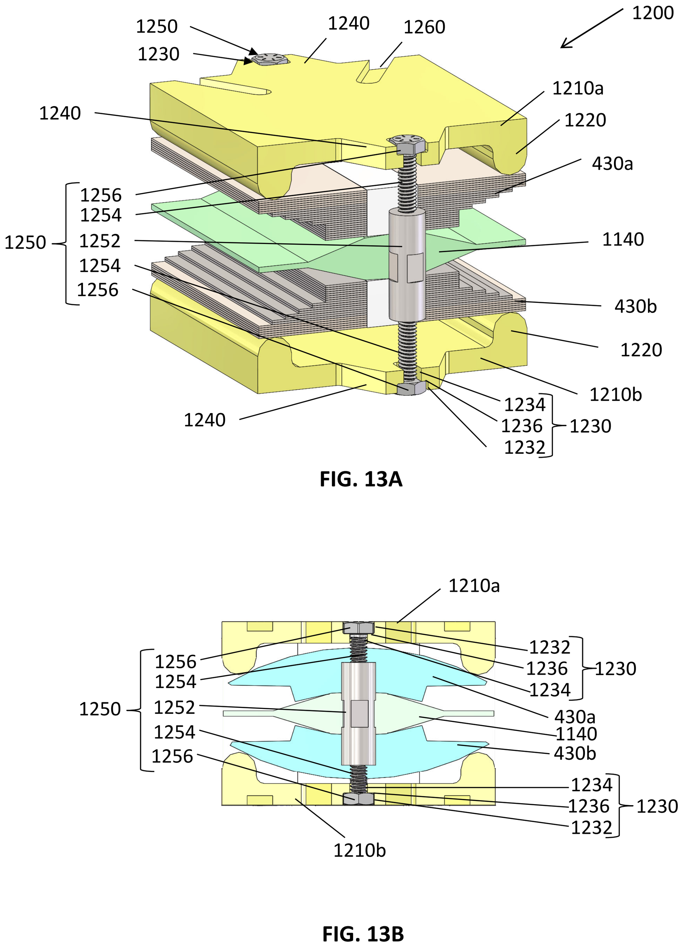

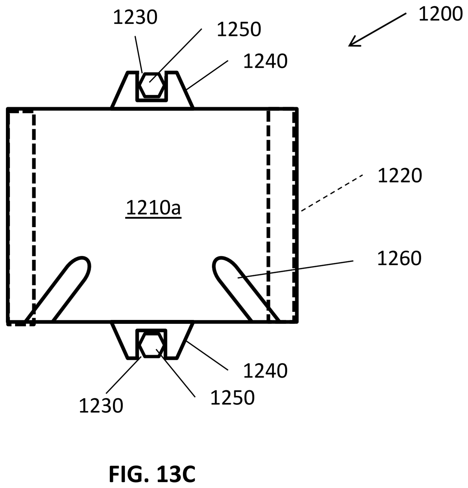

FIGS. 13A - 13C illustrate an alternative compression assembly 1200 which is configured to be pre-compressed prior to incorporation with a cell column 300. FIG. 13A shows the compression assembly 1200 in an uncompressed state, FIG. 13B shows the compression assembly 1200 in the pre-compressed state, and FIG. 13C shows the top view of the compression assembly 1200. The compression assembly 1200 may be similar to the compression assembly 1100 shown in FIG. 12. As such, only the differences therebetween will be discussed in detail.

Referring to FIGS. 13A - 13C, the compression assembly 1200 may include a ceramic upper rod plate 1210a, a ceramic lower rod plate 1210b, a first ceramic spring 430a, a second ceramic spring 430b, a dome plate 1140, and at least one compression device 1250. The rod plates 1210a, 1210b may include integrated support elements 1220 as described above with respect to FIG. 7. However, in other embodiments, support rods 420 may be used in place of one or more of the integrated support elements 1220.

The rod plates 1210a, 1210b include at least one slot 1230 configured to receive a compression device 1250. For example, there may be two slots 1230 located on opposite sides of each rod plate (i.e., the sides of the rod plate that do not face the top connectors 348 and instead face the open sides of a cell column 300). The slots 1230 each include a wider opening overlying or underlying a narrower opening, and each opening has a respective vertical sidewall 1232, 1234. The vertical sidewalls 1232, 1234 are connected by a horizontal landing surface 1236.

The wider opening having sidewall 1232 overlies the narrower opening having sidewall 1234 in the upper slot 1230 in the upper rod plate 1210a. Thus, the horizontal landing surface 1236 faces upwards in the upper slot 1230 in the upper rod plate 1210a. In contrast, the wider opening having sidewall 1232 underlies the narrower opening having sidewall 1234 in the lower slot 1230 in the lower rod plate 1210b. Thus, the horizontal landing surface 1236 faces downwards in the lower slot 1230 in the lower rod plate 1210b.

In some embodiments, the rod plates 1210a, 1210b may also include at least one lateral protrusion 1240, such as a compression bracket. For example, there may be two lateral protrusions 1240 located on opposite sides of each rod plate. Each slot 1230 extends through the respective protrusion 1240. The lateral protrusions 1240 may extend outwards from opposing sides of the rod plates 1210a, 1210b and may include the slots 1230 that are configured to receive the compression devices 1250.

In an alternative embodiment, the lateral protrusions 1240 may be omitted, and each rod plate 1210a, 1210b may have a larger width than a width of the ceramic springs 430a, 430b and the dome plate 1140 along the cell column 300 width direction between open sides of the cell column 300. In this embodiment, the rod plates 1210a, 1210b extend past the ceramic springs 430a, 430b and the dome plate 1140, and the slots 1230 are located in the ends of the main body of the rod plates 1210a, 1210b which protrude past the ceramic springs and the dome plate.

The compression devices 1250 may extend into the slots 1230 and may make contact with the horizontal landing surfaces 1236 in the slots 1230. The compression devices 1250 may be configured to force the rod plates 1210a, 1210b towards each other, such that the rod plates 1210a, 1210b are biased together and compress the springs 430a, 430b against the dome plate 1140. For example, the compression devices 1250 may force the opposing horizontal landing surfaces 1236 toward each other.

In the embodiment shown in FIGS. 13A and 13B, the compression devices 1250 may comprise turnbuckles 1250. The turnbuckles 1250 include a threaded coupling (i.e., main body) 1252, two oppositely threaded bolts 1254 screwed into the threaded coupling 1252, and end fittings (e.g., bolt heads) 1256 located at the opposing ends of the bolts 1254. The horizontal surfaces of the end fittings 1256 contact the horizontal landing surfaces 1236 of the respective slots 1230, and force the respective rod plates 1210a, 1210b toward each other when the main body 1252 is actuated. The present disclosure is not limited to any particular type of compression device 1250. For example, the compression devices 1250 may alternatively comprise chain tensioners, ratchet straps, compression clamps (e.g., c-clamps), wire rope grips, rigging screws, or the like.

In some embodiments, the upper rod plate 1210a may optionally include at least one channel 1260 formed in the top surface thereof. For example, there may be two channels 1260 configured to accommodate protrusions in the above described top plate 342.

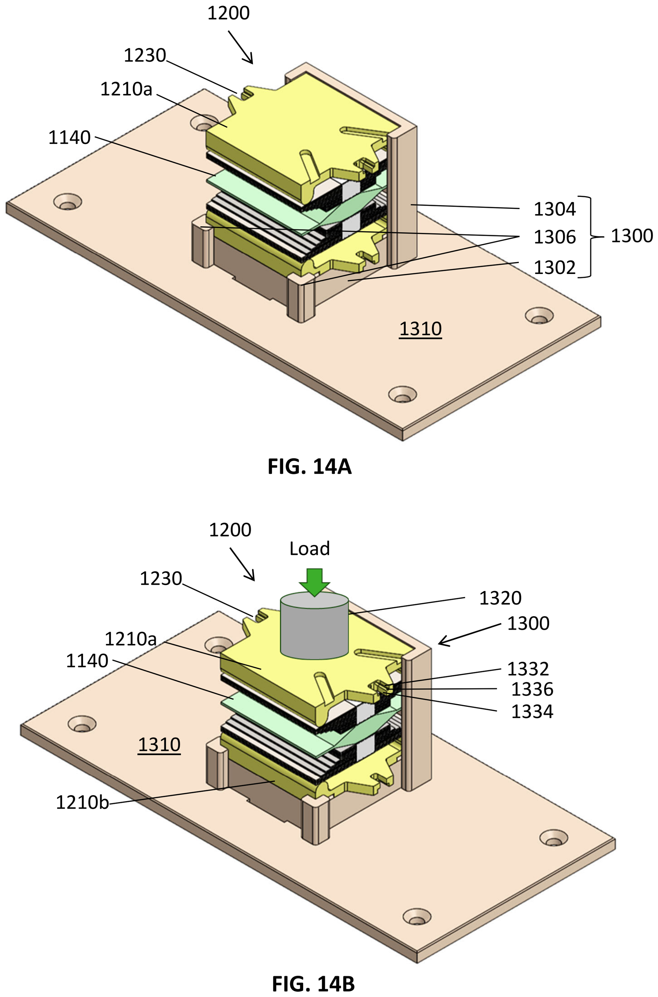

FIGS. 14A-14F are perspective views illustrating a method of assembling the pre-compressed compression assembly 1200 and a cell column 300 including the same, according to various embodiments of the present disclosure. Referring to FIGS. 13A and 14A, the compression assembly 1200 may be assembled using an alignment jig 1300. The alignment jig 1300 may include a base plate 1302, at least one rear alignment bracket 1304, and one or more front brackets 1306. In some embodiments, the alignment jig 1300 may optionally be disposed on a jig support 1310.

The components of the compression assembly 1200 may be stacked, in order, on the alignment jig 1300. For example, the second rod plate 1210b may be disposed on the base plate 1302, and then the second ceramic spring 430b, the dome plate 1140, the first ceramic spring 430a, and the first rod plate 1210a may be stacked thereon. The rear bracket 1304 and/or the front brackets 1306 may be configured to align the compression assembly 1200 components.

Referring to FIG. 14B, a compressive load may be applied to the compression assembly 1200 components by a load applicator (e.g., a mandrel) 1320 to compress the ceramic springs 430a, 430b. In various embodiments, the load applicator 1320 may be configured to apply a force ranging from about 2000 to about 4000 newtons, such as about 2500 to about 3000 newtons, to the stacked compression assembly 1200 components. In some embodiments, a ram of the load applicator 1320 may be locked into position once a desired amount of force is applied and a corresponding amount of compression is achieved. For example, a suitable load applicator 1320 includes a 6800 Series Universal Testing System available from Instron Corp.

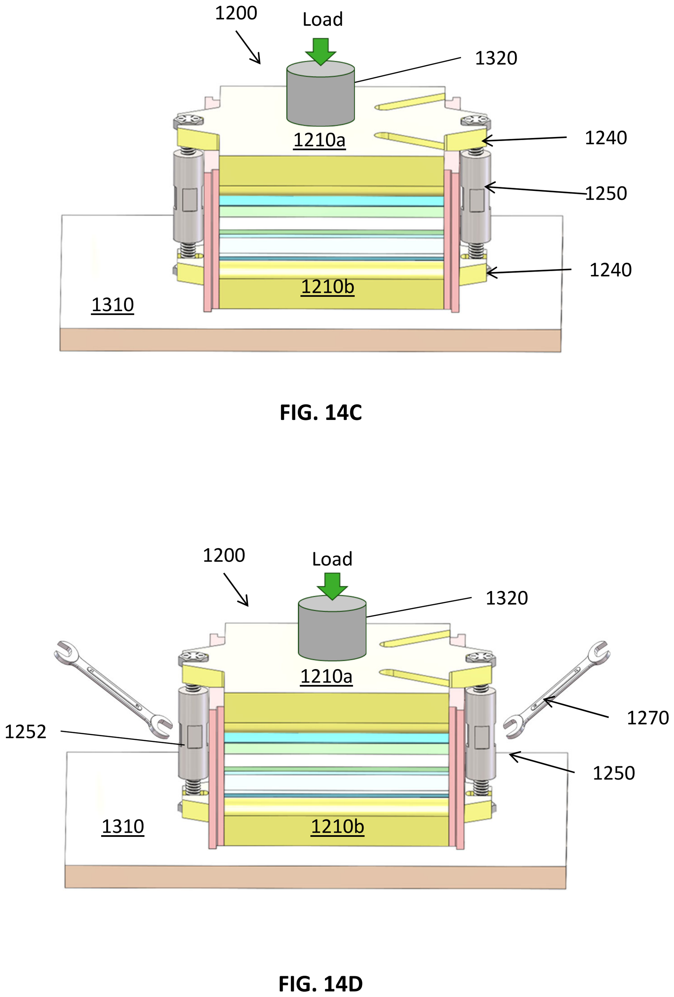

As shown in FIG. 14C, at least one compression device 1250 (e.g., two compression devices, such as two turnbuckles) may be attached to the compression assembly 1200. In particular, the compression devices 1250 may be fitted into the slots 1230 of the rod plates 1210a, 1210b. For example, each turnbuckle 1250 may be placed through the respective slots 1230 in the respective rod plates 1210a, 1210b such that the top end fitting 1256 contacts the upward facing horizontal landing surface 1236 of the upper slot 1230 in the upper rod plate 1210a, and the bottom end fitting 1256 contacts the downward facing horizontal landing surface 1236 of the lower slot 1230 in the lower rod plate 1210b.

As shown in FIG. 14D, the compression devices 1250 may be tightened until the load applied by the load applicator 1320 to the compression assembly 1200 is reduced to zero. In particular, the couplings 1252 may be rotated simultaneously to tighten the compression devices 1250 and uniformly apply force to the stacked compression assembly components. For example, the couplings 1252 may be tightened with torque wrenches 1270 or any other suitable tool.

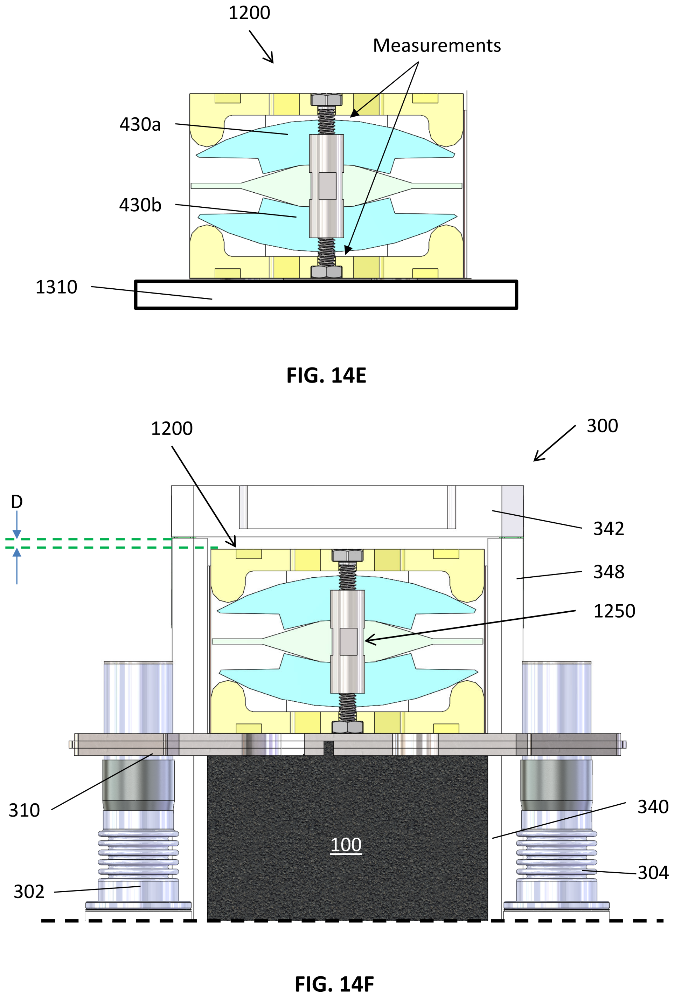

Referring to FIG. 14E, the load applicator 1320 may be retracted and the pre-compressed compression assembly 1200 may be tested for structural compliance. In particular, a dial gauge or a height gauge may be used to determine whether the rod plates 1210a and 1210b are parallel to one another. The pre-compression of the compression assembly 1200 may also be tested by measuring a distance between the middle of each ceramic springs 430a, 430b and the rod plates 1210a, 1210b, for example, by using a taper gauge. Alternatively, the distance between the pre-compressed rod plates may be measured by automatic, non-contact inspection equipment utilizing laser displacement sensors, optical profilometers, ultrasonic sensors, 3D scanners or the like. The compression assembly 1200 may be removed from the jig 1300 before or after testing. In some embodiments, the rear bracket 1304 may be removable from the jig support 1310 to facilitate removal of the compression assembly 1200.

Referring to FIG. 14F, the pre-compressed compression assembly 1200 may be transferred to the location of the cell column 300 and then placed above stack 100 (such as above fuel manifolds/anode splitter plates 310 and/or top termination plate 308). The top plate 342 may be positioned over the compression assembly 1200 and attached to side baffles 340 and top connectors 348 of the cell column 300. A gap or distance D between the top of the compression assembly 1200 and the top plate 342 may be sufficient to prevent interference between the compression assembly 1200 and the top plate 342 when the top plate 342 is attached to the side baffles 340 via top connectors 348. For example, the distance D may range from 0.1 cm to about 2 cm, such as from about 0.5 cm to about 1 cm. The compression devices 1250 may be loosened and then removed through the open sides of the cell column 300. As such, the compression assembly 1200 will expand to contact the top plate 342 and apply pressure to the cell stacks 100 of the cell column 300.

Accordingly, the embodiment described above provides a pre-compressed compression assembly 1200 that can easily be engaged into pressing contact with a cell column 300. As such, column manufacturing may be simplified.

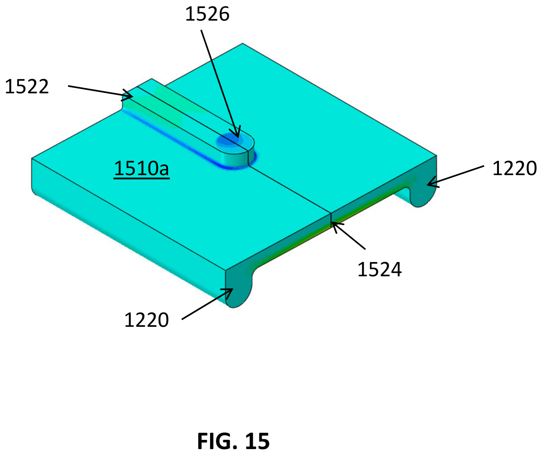

FIG. 15 is a perspective view of another alternative top rod plate 1510a according to another alternative embodiment. The rod plate 1510a is similar to the top rod plate 1210a described above with respect to FIGS. 13A-13C. Thus, only the differences between them will be described below.

The top rod plate 1510a includes the integrated support elements 1220 which protrude downward from the lower surface of the top rod plate 1510a similar to those of the above described top rod plate 1210a. The top rod plate 1510a may also optionally include other elements of the top rod plate 1210a, such as the lateral protrusions 1240 and/or channels 1260. However, the top rod plate 1510a also includes an integrated vertical protrusion 1522 located in its upper surface opposite to the lower surface. The integrated vertical protrusion 1522 may have any suitable shape, such as a rib, mesa, column, etc., which protrudes vertically over a substantially planar top surface of the top rod plate 1510a. The integrated vertical protrusion 1522 comprises the same ceramic material (e.g., alumina) as the rest of the rod plate 1510a and the integrated support elements 1220.

In one embodiment, the integrated vertical protrusion 1522 is located on a centerline 1524 of the rod plate 1510a. The centerline 1524 may be located equidistant between the integrated support elements 1220. In one embodiment, the integrated vertical protrusion 1522 is located at least on the geometrical center 1526 of the top surface of the rod plate 1510a, and may extend past the geometrical center 1526 along the centerline 1524 and/or along a direction different from the centerline 1524.

As described above with respect to FIG. 14B, the load applicator (e.g., a mandrel) 1320 is used to apply a downward force to the integrated vertical protrusion 1522 at the geometrical center 1526 of the top rod plate 1510a during formation of the pre-compressed compression assembly. Since the top rod plate 1510a has a greater thickness at its geometrical center 1526 on the centerline 1524 than laterally offset from the centerline 1524 due to the presence of the integrated vertical protrusion 1522, the amount of downward displacement of the top rod plate 1510a at the centerline 1524 is reduced during the application of the downward force by the load applicator 1320. This reduces the likelihood that the top rod plate 1510a cracks during the application of the downward force by the load applicator 1320. While FIG. 15 illustrates a rib shaped integrated vertical protrusion 1522 which extends from the geometric center 1526 to an edge of the top rod plate 1510a along the centerline 1524, in alternative embodiments, the integrated vertical protrusion may have a shape of a mesa or a pillar which is located at the geometric center 1526, but which does not extend to the edge of the top rod plate 1510a, or a shape of a rib which extends along the centerline 1524 between opposing edges of the top rod plate 1510a.

In one embodiment, the bottom rod plate 1210b shown in FIGS. 13A - 13B may lack a vertical protrusion in its bottom surface. Thus, the pre-compressed compression assembly may include a top rod plate 1510a which includes the integrated vertical protrusion 1522 and a bottom rod plate 1210b which lacks the integrated vertical protrusion.

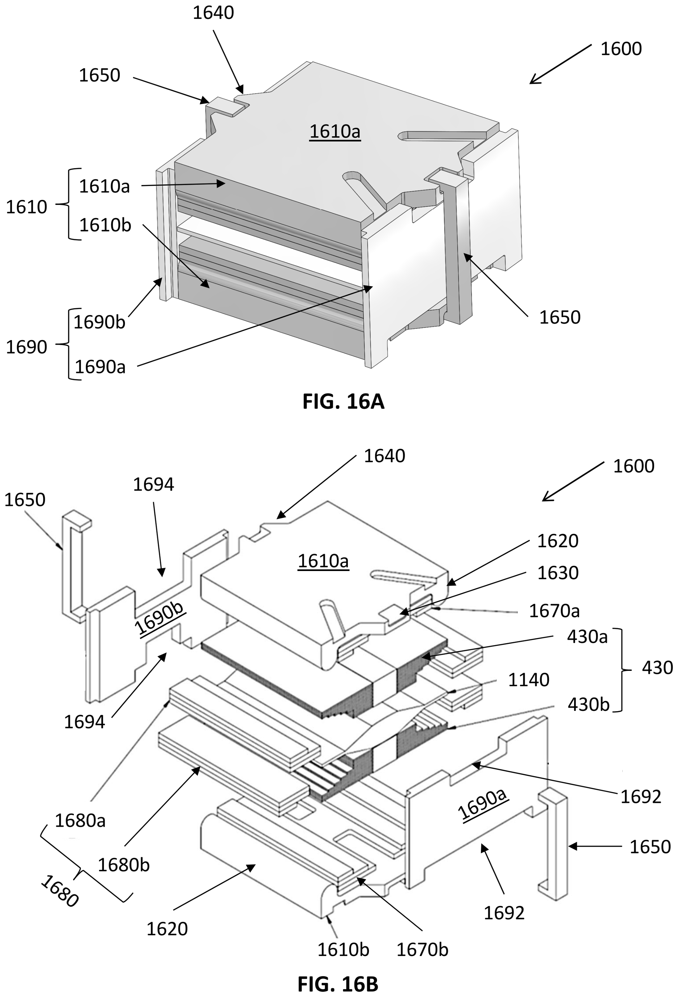

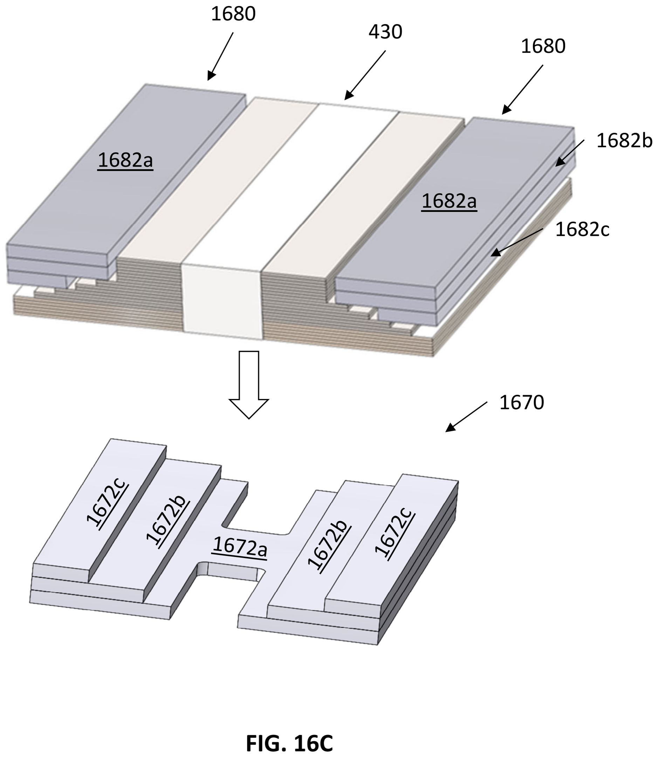

FIGS. 16A-16C illustrate an alternative compression assembly 1600 which is configured to be pre-compressed prior to incorporation with a cell column 300. FIG. 16A is a perspective view showing the compression assembly 1600 in a compressed state, FIG. 16B shows an exploded view of the compression assembly 1600 of FIG. 16A, and FIG. 16C is an exploded perspective view of plate shims 1670, a ceramic spring 430, and spring shims 1680 of the compression assembly 1600 of FIGS. 16A and 16B, according to various embodiments of the present disclosure. The compression assembly 1600 may be similar to the compression assembly 1200 shown in FIGS. 13A - 13C. As such, only the differences therebetween will be discussed in detail.

Referring to FIGS. 16A-16C, the compression assembly 1600 may include ceramic rod plates 1610, such as an upper (e.g., first) rod plate 1610a and a lower (e.g., second) rod plate 1610b, ceramic springs 430, such as an upper (e.g., first) ceramic spring 430a and a lower (e.g., second) ceramic spring 430b, a dome plate 1140, clamps 1650, plate shims 1670, such as upper (e.g., first) plate shims 1670a and lower (e.g., second) plate shims 1670b, spring shims 1680, such as upper (e.g., first) spring shims 1680a and lower (e.g., second) spring shims 1680b, and baffles 1690, such as a front baffle 1690a and a back baffle 1690b. The rod plates 1610 may include integrated support elements 1620 as described above with respect to integrated support elements 720 of FIG. 7. However, in other embodiments, support rods 420 may be used in place of one or more of the integrated support elements 1620.

The rod plates 1610 may include at least one slot 1630 configured to receive a respective clamp 1650. The slot 1630 may comprise recess that extends part way through a thickness of the rod plate 1610. For example, there may be two slots 1630 located on opposite sides of each rod plate 1610 that face the respective baffles 1690. The slots 1630 may be located in the upper surface of the upper rod plate 1610a and in the lower surface of the lower rod plate 1610b.

In some embodiments, the rod plates 1610 may also include lateral protrusions 1640 located on opposite sides of each rod plate 1610 that face the respective baffles 1690. The lateral protrusions 1640 may extend outwards from the opposing sides of the rod plates 1610. Each slot 1630 may be formed in a respective lateral protrusion 1640.

In an alternative embodiment, the lateral protrusions 1640 may be omitted, and each rod plate 1610 may have a larger width than a width of the ceramic springs 430 and the dome plate 1140 along the cell column 300 width direction between open sides of the cell column 300. In this embodiment, the rod plates 1610 extend past the ceramic springs 430 and the dome plate 1140, and the slots 1630 are located in the ends of the main body of the rod plates 1610 which protrude past the ceramic springs 430a, 430b and the dome plate 1140.

The clamps 1650 may be C-shaped structures (e.g., having two horizontal end portions connected by a vertical portion) configured to mate with the slots 1630 of the rod plates 1610. Thus, each clamp 1650 may include horizontal end portions that are located in (i.e., in contact with) the respective slots 1630 of two rod plates 1610a and 1610b. The clamps 1650 are configured to resist outward movement of the rod plates 1610 so as to hold the compression assembly 1600 in a compressed position.

As shown in FIGS. 16B and 16C, the plate shims 1670 may be placed in contact with a corresponding rod plate 1610 and a ceramic spring 430 may be disposed over the plate shims 1670. The plate shims 1670 may have a stepped structure. In particular, the plate shims 1670 may each include a relatively large first shim 1672a, intermediate-sized second shims 1672b, and relatively small third shims 1672c. The first shim 1672a may be disposed on an adjacent rod plate 1610 and the third shims 1672c may be disposed facing an adjacent ceramic spring 430.

The spring shims 1680 may be disposed on opposing sides of the of the dome plate 1140. The upper spring shims 1680a are located between a top surface of the dome plate 1140 and a bottom surface of opposing sides of the upper ceramic spring 430a, while the lower spring shims 1680b are located between the bottom surface of the dome plate 1140 and a top surface of opposing sides of the lower ceramic spring 430b. The spring shims 1680 may have a stepped structure configured to interface with the stepped side surfaces of the ceramic springs 430. In particular, the spring shims 1680 may include a relatively large first shim 1682a, intermediate-sized second shims 1682b, and relatively small third shims 1682c, as shown in FIG. 16C.

In various embodiments, the baffles 1690 may be formed of a ceramic material and may be configured to reduce air flow through the compression assembly 1600 by inhibiting the flow of air through opposing sides of the compression assembly 1600. As such, the baffles 1690 may be configured to increase air flow through interconnect air channels of cell stacks 100 of a corresponding cell column 300 and thereby reduce stack air bypass. The front baffle 1690a and/or the back baffle 1690b may be utilized in any of the compression assemblies disclosed herein, such as compression assemblies 400, 500, 600, 700, 800, 1100, 1200.

The front baffle 1690a faces the air inlet side of the column 300. The back baffle 1690b faces the air outlet side of the column 300. The front baffle 1690a and the back baffle 1690b include cut outs 1692 and 1694, respectively, which permit the end portions of the clamps 1650 to pass through and engage the slots 1630 in the rod plates 1610. In one embodiment, the cut outs 1694 in the back baffle 1690b may be larger than the cut outs 1692 in the front baffle 1690a. In this embodiment, the front baffle 1690a has a greater surface area than the back baffle 1690b to inhibit the air inlet stream from bypassing the stacks 100 of the column 300 through the compression assembly 1600. In contrast, the back baffle 1690b may include larger cut outs 1694 on top and bottom than the respective cut outs 1692 in the front baffle 1690a to allow measurement of the gap between the ceramic springs 430a and 430b through the larger cut outs 1694 in the back baffle 1690b. The gap between the ceramic springs 430a and 430b is used as a proxy for determining a compression load on the column 300 (i.e., the larger the gap, the smaller the load). The measurement of the gap may be accomplished manually or automatically as described above with respect to FIG. 14E.

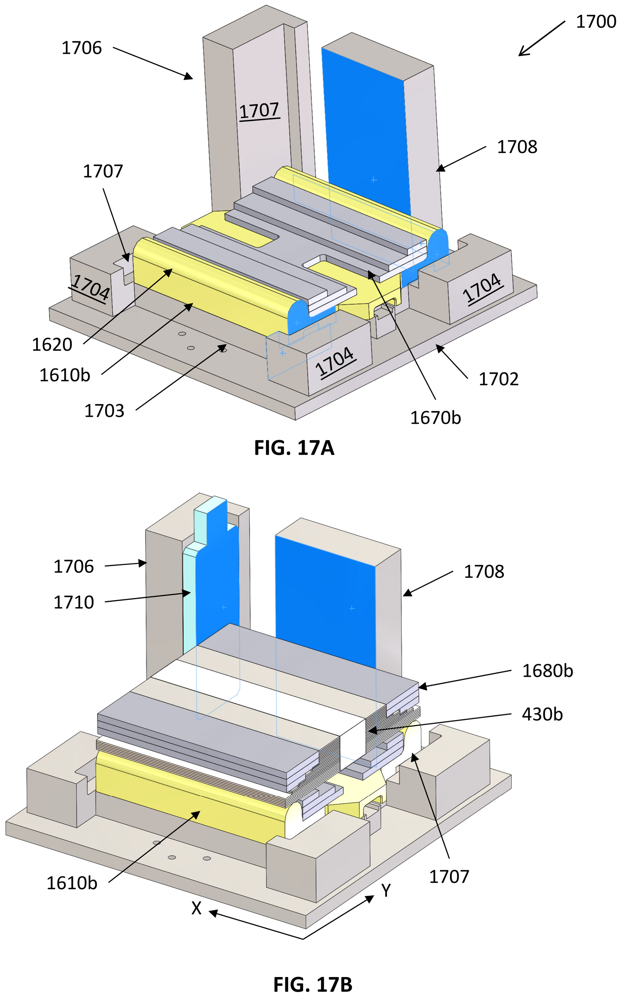

FIGS. 17A-17I illustrate steps in a method of assembling the compression assembly 1600 of FIG. 16A, according to various embodiments of the present disclosure. Referring to FIG. 17A, the method may be performed using a jig 1700, which may be formed of a metal material, such as aluminum or steel. The jig 1700 may be configured to properly align the components of the compression assembly 1600 during assembly and may comprise a base plate 1702, a stage 1703, three short corner locators 1704, a long corner locator 1706 that is longer in a vertical direction than the three short corner locators 1704, and a side locator 1708. The stage 1703 may be disposed in the middle of the base plate 1702. The corner locators 1704, 1706 may be disposed adjacent to corners of the base plate 1702. The side locator 1708 may be disposed between one of the short corner locators 1704 and the long corner locator 1706. The corner locators 1704, 1706, and side locator 1708 may be aligned via contact with the stage 1703. The corner locators 1704, 1706 may include inward facing recesses 1707 disposed above the stage 1703.

The lower rod plate 1610b may be placed on the stage 1703 between the corner locators 1704, 1706. In particular, the corner locators 1704, 1706 may be configured to align the lower rod plate 1610b with the stage 1703. Lower plate shims 1670b may be placed (i.e., stacked) on the lower rod plate 1610b between the support elements 1620. In some embodiments, the lower plate shims 1670b may be attached to the lower rod plate 1610b using an adhesive, either before or after the lower rod plate 1610b is placed in the jig 1700.

Referring to FIG. 17B, the lower ceramic spring 430b and the lower spring shims 1680b may be placed (i.e., stacked) on the lower rod plate 1610b over the lower plate shims 1670b. The lower spring shims 1680b may be attached to the lower ceramic spring 430b using an adhesive, either before or after the lower ceramic spring 430b is placed in the jig 1700. A setting plate 1710 may be inserted between the long corner locator 1706 and the components 1610, 1670, 430, 1680 of the assembly 1600 to align at least the lower ceramic spring 430b and the lower rod plate 1610b in an X direction. Flush contact with the side locator 1708 may ensure component alignment in a Y direction.

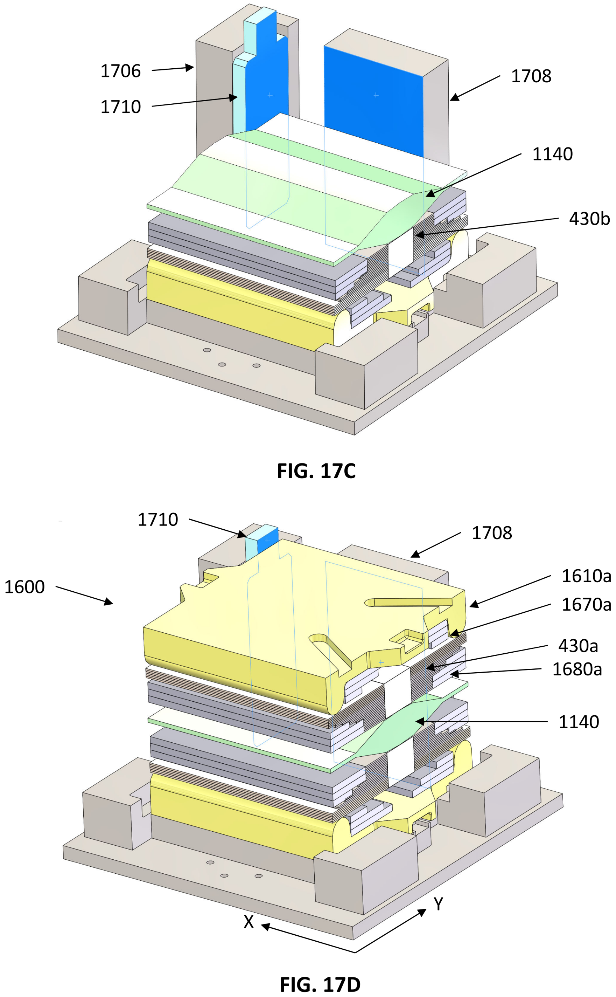

Referring to FIG. 17C, the dome plate 1140 may be placed on the lower ceramic spring 430b and on the lower spring shims 1680b. Referring to FIG. 17D, the upper spring shims 1680a and the upper ceramic spring 430a may be placed on the dome plate 1140. The upper plate shims 1670a and the upper rod plate 1610a may be placed on the upper ceramic spring 430a, to at least partially form the compression assembly 1600. The stacking of components in jig 1700 may be accomplished manually or automatically via a robotic stacking system, a pick-and-place system with stacking capability, or the like.

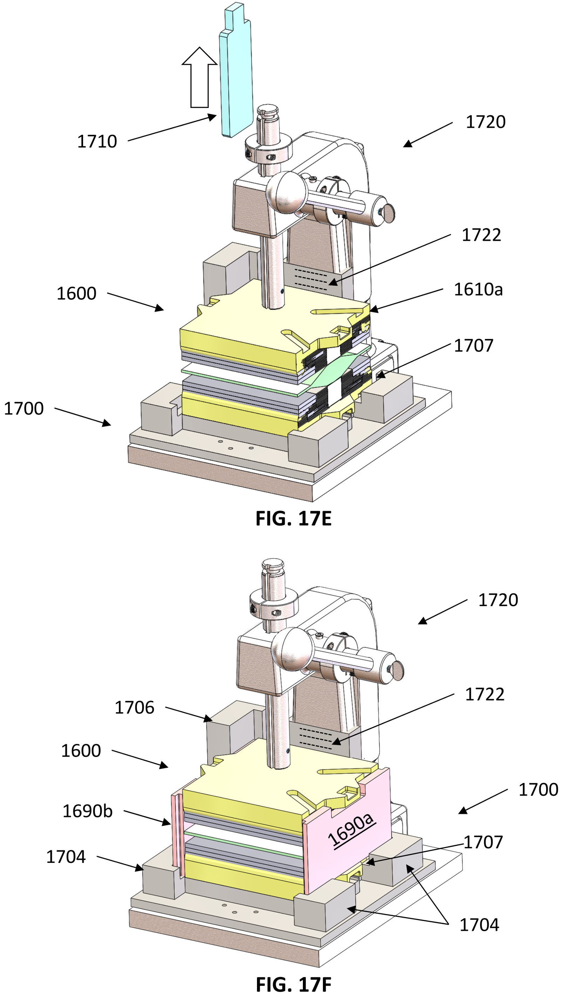

Referring to FIG. 17E, the jig 1700 may be disposed on a compression tool 1720, such as an arbor press or the like. Pressure may be applied by the compression tool 1720 to compress the compression assembly 1600. For example, a first load (i.e., a first weight) ranging from about 10 pounds of force (lbf) to about 30 lbf, such as 15 lbf to 25 lbf may be applied to at least partially compress the compression assembly 1600. After the compression, the setting plate 1710 may be removed.

Referring to FIG. 17F, the front baffle 1690a and the back baffle 1690b may be disposed on opposite sides of the compression assembly 1600. In particular, the baffles 1690 may be inserted into the recesses 1707 of the corner locators 1704, 1706, such that the corner locators hold the baffles 1690 in position in the jig 1700. Additional pressure may be applied by the compression tool 1720 to fully compress the compression assembly 1600. For example, a second load (i.e., a second weight) greater than the first load, such as a second load ranging from about 15 lbf to about 40 lbf, such as 25 lbf to 35 lbf may be applied. The compression tool 1720 may include graduated markings 1722. The location of the upper rod plate 1610a may be compared to the graduated markings 1722 to determine whether the compression assembly 1600 is fully compressed.

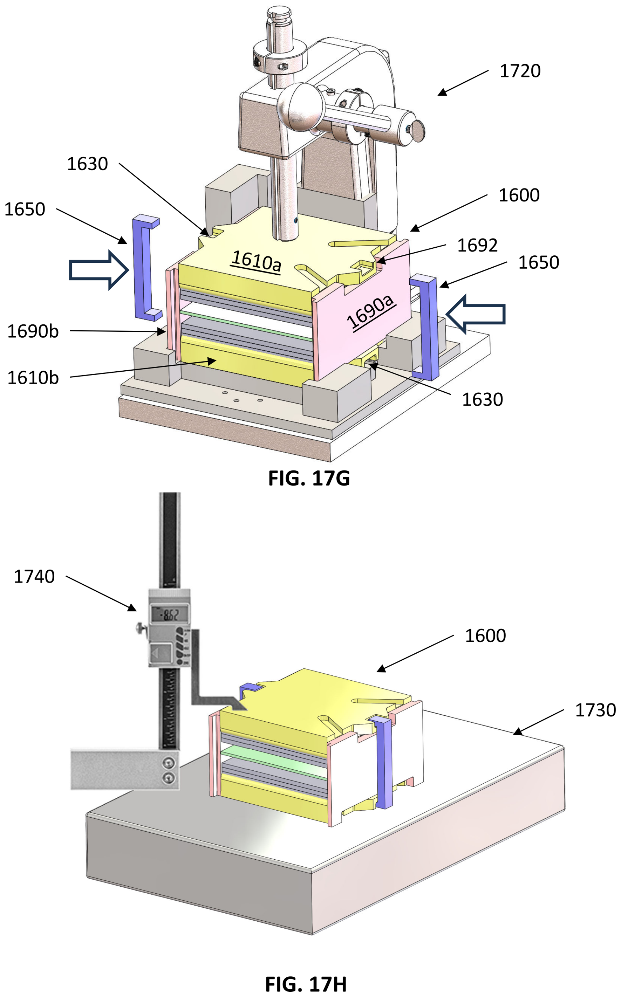

Referring to FIG. 17G, the clamps 1650 may be applied to opposing sides of the compression assembly 1600 to maintain compression, and the pressure applied by the compression tool 1720 may be released. In particular, the horizontal ends of the clamps 1650 may be fitted into the slots 1630 of the upper and lower rod plates 1610a, 1610b, such that the clamps 1650 prevent the upper and lower rod plates 1610a, 1610b from being forced apart vertically.

Referring to FIG. 17H, the compression assembly 1600 may be removed from the jig 1700 and disposed on a planar examination surface or table 1730. A height gauge 1740 may be used to measure the height of the compression assembly 1600. In particular, the height of each corner of the compression assembly 1600 may be measured to determine whether the compression assembly 1600 has acceptable vertical dimensions for insertion into a cell column. Alternatively, as described above, the height of the compression assembly may be measured automatically via automated inspection equipment.

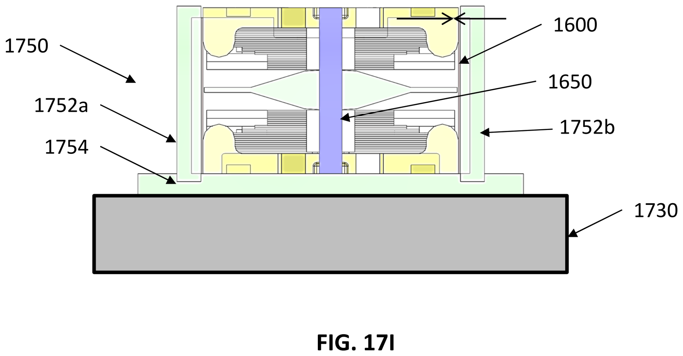

Referring to FIG. 17I, the compression assembly 1600 may be inserted into a measurement fixture 1750. The measurement fixture 1750 includes two vertically positioned plates 1752a and 1752b supported by a fixture base plate 1754. The two vertically positioned plates 1752a and 1752b are spaced apart by predetermined width that corresponds to the desired width of the compression assembly 1600. The measurement fixture 1750 may be used to determine whether the compression assembly 1600 has acceptable lateral dimensions for insertion into a cell column 300. Specifically, if the compression assembly 1600 fits between the two vertically positioned plates 1752a and 1752b, then it has an acceptable width.

If the dimensions of the compression assembly 1600 are acceptable, the compression assembly 1600 may be placed into pressing contact with a cell column 300, as shown in FIG. 14F, and a load may be applied to the compression assembly 1600. The clamps 1650 may then be removed, such that the compression assembly 1600 applies pressure to cell stacks 100 of the column 300.

In the previous embodiments, the columns 300 and the stack assemblies 301 are described as being positioned vertically. However, in alternative embodiments, the columns 300 and the stack assemblies 301 may be positioned horizontally. Furthermore, in the previous embodiments, the at least one spring assembly and/or the LSA are described as being located above a vertically positioned stack assembly 301. However, in alternative embodiments, the at least one spring assembly and/or the LSA may be located below the vertically positioned stack assembly 301. Furthermore, in embodiments that include plural spring assemblies with dedicated dome plates, one of the spring assemblies and dome plates may be located on one end (e.g., top end) of the stack assembly 301, while the other spring assembly and the other dome plate may be located on the opposite end (e.g., bottom end) of the stack assembly 301. Additionally, in embodiments that include a spring assembly and a LSA, the spring assembly may be located on one end (e.g., top end or bottom end) of the stack assembly 301, while the LSA may be located on the opposite end (e.g., bottom end or top end) of the stack assembly 301.

Any one or more features from any one or more embodiments may be used in any suitable combination with any one or more features from one or more of the other embodiments. Although the foregoing refers to particular preferred embodiments, it will be understood that the invention is not so limited. It will occur to those of ordinary skill in the art that various modifications may be made to the disclosed embodiments and that such modifications are intended to be within the scope of the invention. All of the publications, patent applications and patents cited herein are incorporated herein by reference in their entirety.

## Claims

1. A column, comprising:
a stack assembly comprising stacked electrochemical cells and interconnects;
a ceramic frame surrounding the stack assembly;
a first spring assembly located inside of the ceramic frame over the stack assembly and configured to apply a load to the stack assembly, wherein the first spring assembly comprises a first rod plate and a first ceramic spring;
a second spring assembly located inside of the ceramic frame between first spring assembly and the stack assembly and configured to apply a load to the stack assembly, wherein the second spring assembly comprises a second rod plate and a second ceramic spring; and
a first dome plate located between the first ceramic spring and the second ceramic spring.

2. The column of claim 1, wherein the first dome plate comprises:
a lower curved surface contacting the second ceramic spring; and
an upper curved surface contacting the first ceramic spring.

3. The column of claim 2, wherein:
the first rod plate comprises a ceramic plate;
the second rod plate comprises a ceramic plate;
the first spring assembly further comprises first ceramic support rods contacting a bottom surface of the first rod plate and a top surface of the first ceramic spring; and
the second spring assembly further comprises second ceramic support rods contacting a top surface of the second rod plate and a bottom surface of the second ceramic spring.

4. The column of claim 2, wherein:
the first rod plate comprises a ceramic plate;
the second rod plate comprises a ceramic plate;
the first rod plate comprises integrated first ceramic support rods extending downward from a bottom surface of the first rod plate and contacting a top surface of the first ceramic spring; and
the second spring assembly further comprises ceramic support rods contacting a top surface of the second rod plate and a bottom surface of the second ceramic spring.

5. The column of claim 1, wherein:
the first ceramic spring is located over the first rod plate;
the second ceramic spring is located over the second rod plate; and
a second dome plate is located over the first ceramic spring.

6. The column of claim 5, wherein:
the first rod plate comprises a ceramic plate;
the second rod plate comprises a ceramic plate;
the first spring assembly further comprises first ceramic support rods contacting a top surface of the first rod plate and a bottom surface of the first ceramic spring; and
the second spring assembly further comprises second support rods contacting a top surface of the second rod plate and a bottom surface of the second ceramic spring.

7. The column of claim 5, wherein at least one of the first rod plate or the second rod plate comprises integrated ceramic support rods that protrude from the opposing sides of a top surface of the rod plate.

8. The column of claim 5, further comprising a third spring assembly located on the first and second spring assemblies and configured to apply a load to the stack assembly, the third spring assembly comprising:
a third rod plate;
a third ceramic spring located over the third rod plate; and
a third dome plate located over the third ceramic spring.

9. The column of claim 1, further comprising compression shims located between the ceramic frame and the first and the second spring assemblies, wherein at least a portion of the compression shims are formed of a metal alloy.

10. The column of claim 1, wherein the first and the second ceramic springs comprise ceramic leaf springs comprising layers formed of a composite ceramic matrix material.

11. The column of claim 1, wherein the stack assembly further comprises fuel manifolds and glass or glass-ceramic seals.

12. The column of claim 1, wherein the electrochemical cells comprise solid oxide fuel cells or solid oxide electrolyzer cells.

13. The column of claim 1, further comprising:
a front baffle covering a first side of the compression assembly; and
a back baffle covering an opposing second side of the compression assembly,
wherein the front and back baffles are configured to reduce air flow through the compression assembly, wherein the front and back baffles extend from the first rod plate to the second rod plate.

14. A method of assembling an electrochemical cell column, the method comprising:
providing a pre-compressed compression assembly comprising a first rod plate, a first ceramic spring disposed on the first rod plate, a dome plate disposed on the first ceramic spring, a second ceramic spring disposed on the dome plate, a second rod plate disposed on the second ceramic spring, and at least one compression device forcing the first rod plate toward the second rod plate, such that the first and second ceramic springs are pressed against the dome plate;
placing the pre-compressed compression assembly into contact with an electrochemical cell column; and
removing the at least one compression device, whereby the compression assembly applies pressure to electrochemical cells of the electrochemical cell column.

15. A method of assembling a compression assembly, comprising:
stacking a first rod plate on a stage of a jig, the jig comprising corner locators located at corners of the stage and a side locator located between two of the corner locators at a side of the stage;
inserting a setting plate between one of the corner locators and the first rod plate;
stacking a first ceramic spring, a dome plate, a second ceramic spring, and a second rod plate on the first rod plate to form a compression assembly;
using a compression tool to apply a first load to compress the compression assembly;
placing air baffles on opposing first and second sides of the compression assembly;
using the compression tool to apply a second load to further compress the compression assembly;
placing clamps on the first and second sides of the compression assembly; and
releasing the second load, such that the first and second rod plates are biased against the clamps by the first and second ceramic springs.
